# EUROPEAN PATENT APPLICATION

(11) **EP 4 712 657 A1**
(43) Date of publication of application: **18.03.2026**
(21) Application number: 24802577.7
(22) Date of filing: 04.03.2024
(51) Int. Cl.: H04W 72/25

(54) **METHOD AND APPARATUS FOR REPORTING BUFFER AREA STATUS REPORT, AND TERMINAL AND NETWORK DEVICE**

(30) Priority: 11.05.2023 CN 202310533416
(71) Applicant: Datang Mobile Communications Equipment Co., Ltd., Beijing 100085 (CN)
(72) Inventor: ZHAO, Yali, Beijing 100085 (CN)
(74) Representative: Maiwald GmbH
(86) International application number: PCT/CN2024/079783
(87) International publication number: WO 2024/230289

(57) **Abstract**

The present disclosure provides a buffer status reporting method, apparatus, terminal, and network device. The method comprises: a relay terminal acquiring a mapping between a first target object and a second hop LCG ID; and sending an SL BSR to a first network device according to the mapping between the first target object and the second hop LCG ID; wherein the first target object comprises one of the following: a first hop SL RLC channel; a second hop SL RLC channel; an end-to-end bearer between a first terminal and a second terminal.

## Description

### CROSS-REFERENCE TO RELATED APPLICATION

The present disclosure claims priority to Chinese Patent Application No. 202310533416.9, titled "Buffer status reporting Method, Apparatus, Terminal, and Network Device", filed with the China National Intellectual Property Administration on May 11, 2023, the entire contents of which are incorporated herein by reference.

### TECHNICAL FIELD

The present disclosure relates to the field of communication technologies, and particularly to a buffer status reporting method, apparatus, terminal, and network device.

### BACKGROUND

To extend the coverage of the direct communication interface, User Equipment to User Equipment relay (UE-to-UE relay, also referred to as U2U relay) is introduced. A U2U relay is a terminal with relay functionality, and the interfaces used between the U2U relay and the UE (also referred to as the Remote UE) are direct communication interfaces (also referred to as PC5 interfaces or Sidelink interfaces).

In traditional direct communication systems, the data to be sent by a terminal originates from Quality of Service (QoS) flows delivered by its own upper layers. Therefore, the terminal can learn the QoS profile of the service. By reporting the QoS profile to the network device, the terminal can obtain the mapping relationship between the QoS identifier and the Logical Channel Group (LCG) from the network device. However, in the U2U relay scenario, the data to be sent by the relay UE does not come from its own upper layer QoS flows, but originates from the PC5 Radio Link Control (RLC) channels of the UE. Therefore, the relay UE cannot learn the QoS profile corresponding to the data to be sent, resulting in the relay UE being unable to obtain the LCG corresponding to the data through the QoS profile reporting process in related art. Consequently, it cannot perform Sidelink (SL) Buffer Status Report (BSR) reporting, which leads to the relay UE being unable to obtain corresponding direct communication interface resources for data forwarding from the network device.

### SUMMARY

An object of the present disclosure is to provide a buffer status reporting method, apparatus, terminal, and network device, which solve the problem that a relay UE in a U2U relay scenario cannot obtain direct communication interface resources for data forwarding.

Embodiments of the present disclosure provide a buffer status reporting method, comprising:
A relay terminal acquiring a mapping between a first target object and a second hop Logical Channel Group Identity Document (LCG ID);
The relay terminal sending an SL BSR to a first network device according to the mapping between the first target object and the second hop LCG ID;
Wherein, the first target object comprises one of the following:
   a first hop sidelink Sidelink (SL) Radio Link Control (RLC) channel;
   a second hop SL RLC channel;
   an end-to-end bearer between a first terminal and a second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal;
   The first network device is a network device serving the relay terminal.

In some embodiments, the acquiring a mapping between a first target object and a second hop LCG ID comprises:
acquiring the mapping between the first target object and the second hop LCG ID from a first node;
The first node comprises one of the following:
   the first terminal;
   the relay terminal;
   the first network device.

In some embodiments, in a case where the first node is the first terminal, the acquiring the mapping between the first target object and the second hop LCG ID from the first node comprises:
receiving first configuration information sent by the first terminal, the first configuration information comprising the mapping between the first target object and the second hop LCG ID.

In some embodiments, in a case where the first node is the relay terminal or the first node is the first network device, the method further comprises:
sending second configuration information to the first terminal, the second configuration information comprising a mapping between a second target object and a first hop LCG ID;
Wherein, the second target object comprises one of the following:
   a first hop SL RLC channel;
   an end-to-end bearer between the first terminal and the second terminal.

In some embodiments, in a case where the first node is the first network device, the method further comprises:
sending first assistance information to the first network device;
Wherein, the first assistance information comprises at least one of the following:
   a Quality of Service (QoS) profile of an end-to-end service;
   a layer 2 destination address of the relay terminal;
   a layer 2 source address of the relay terminal;
   an end-to-end layer 2 destination address corresponding to the second terminal;
   an end-to-end layer 2 source address corresponding to the second terminal.

In some embodiments, the first configuration information is carried by at least one of the following signaling:
sidelink PC5-Radio Resource Control (RRC) signaling;
Medium Access Control (MAC) Control Element (CE);
Sidelink Control Information (SCI).

In some embodiments, the second configuration information is carried by at least one of the following signaling:
PC5-RRC signaling;
MAC CE;
SCI.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

Embodiments of the present disclosure provide a buffer status reporting method, comprising:
A first terminal sending a mapping between a first target object and a second hop LCG ID to a relay terminal, or, the first terminal receiving a mapping between a second target object and a first hop LCG ID sent by the relay terminal;
Wherein, the first target object comprises one of the following:
   a first hop SL RLC channel;
   a second hop SL RLC channel;
   an end-to-end bearer between the first terminal and a second terminal;
   The second target object comprises one of the following:
      a first hop SL RLC channel;
      an end-to-end bearer between the first terminal and the second terminal;
      Wherein, the first hop is a direct communication interface and/or link between the first terminal and the relay terminal, and the second hop is a direct communication interface and/or link between the relay terminal and the second terminal;
      The first terminal and the second terminal establish an end-to-end connection through the relay terminal, the first terminal is a terminal that sends data through the relay terminal, and the second terminal is a terminal that receives data through the relay terminal.

In some embodiments, the sending a mapping between a first target object and a second hop LCG ID to a relay terminal comprises:
determining first configuration information, the first configuration information comprising the mapping between the first target object and the second hop LCG ID;
sending the first configuration information to the relay terminal.

In some embodiments, the determining first configuration information comprises:
receiving the first configuration information sent by a second network device, wherein the second network device is a network device serving the first terminal.

In some embodiments, the method further comprises:
sending second assistance information to the second network device;
Wherein, the second assistance information comprises at least one of the following:
   a QoS profile of an end-to-end service;
   a layer 2 destination address of the relay terminal;
   a layer 2 source address of the relay terminal;
   an end-to-end layer 2 destination address corresponding to the second terminal;
   an end-to-end layer 2 source address corresponding to the second terminal.

In some embodiments, the first configuration information is carried by at least one of the following signaling:
PC5-RRC signaling;
MAC CE;
SCI.

In some embodiments, the receiving a mapping between a second target object and a first hop LCG ID sent by the relay terminal comprises:
receiving second configuration information sent by the relay terminal, the second configuration information comprising the mapping between the second target object and the first hop LCG ID.

In some embodiments, the second configuration information is carried by at least one of the following signaling:
PC5-RRC signaling;
MAC CE;
SCI.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

Embodiments of the present disclosure provide a buffer status reporting method, comprising:
A first network device receiving an SL BSR sent by a relay terminal according to a mapping between a first target object and a second hop LCG ID;
Wherein, the first target object comprises one of the following:
   a first hop SL RLC channel;
   a second hop SL RLC channel;
   an end-to-end bearer between a first terminal and a second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal.

In some embodiments, the method further comprises:
sending the mapping between the first target object and the second hop LCG ID to the relay terminal.

In some embodiments, the method further comprises:
receiving first assistance information sent by the relay terminal;

Wherein, the first assistance information comprises at least one of the following:
a QoS profile of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

Embodiments of the present disclosure provide a terminal, comprising: a memory, a transceiver, and a processor:
The memory is configured to store a computer program; the transceiver is configured to receive and send data under the control of the processor; the processor is configured to read the computer program in the memory and perform the following operations:
acquiring a mapping between a first target object and a second hop LCG ID;
sending an SL BSR to a first network device according to the mapping between the first target object and the second hop LCG ID;
Wherein, the first target object comprises one of the following:
   a first hop sidelink SL RLC channel;
   a second hop SL RLC channel;
   an end-to-end bearer between a first terminal and a second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal;
   The first network device is a network device serving the relay terminal.

In some embodiments, the processor is configured to read the computer program in the memory and perform the following operation:
acquiring the mapping between the first target object and the second hop LCG ID from a first node;
The first node comprises one of the following:
   the first terminal;
   the relay terminal;
   the first network device.

In some embodiments, the processor is configured to read the computer program in the memory and perform the following operation:
receiving first configuration information sent by the first terminal, the first configuration information comprising the mapping between the first target object and the second hop LCG ID.

In some embodiments, the processor is configured to read the computer program in the memory and perform the following operation:
sending second configuration information to the first terminal, the second configuration information comprising a mapping between a second target object and a first hop LCG ID;
Wherein, the second target object comprises one of the following:
   a first hop SL RLC channel;
   an end-to-end bearer between the first terminal and the second terminal.

In some embodiments, the processor is configured to read the computer program in the memory and perform the following operation:
sending first assistance information to the first network device;
Wherein, the first assistance information comprises at least one of the following:
   a QoS profile of an end-to-end service;
   a layer 2 destination address of the relay terminal;
   a layer 2 source address of the relay terminal;
   an end-to-end layer 2 destination address corresponding to the second terminal;
   an end-to-end layer 2 source address corresponding to the second terminal.

In some embodiments, the first configuration information is carried by at least one of the following signaling:
sidelink PC5-RRC signaling;
MAC CE;
SCI.

In some embodiments, the second configuration information is carried by at least one of the following signaling:
PC5-RRC signaling;
MAC CE;
SCI.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

Embodiments of the present disclosure provide a terminal, comprising: a memory, a transceiver, and a processor:
The memory is configured to store a computer program; the transceiver is configured to receive and send data under the control of the processor; the processor is configured to read the computer program in the memory and perform the following operations:
sending a mapping between a first target object and a second hop LCG ID to a relay terminal, or, receiving a mapping between a second target object and a first hop LCG ID sent by the relay terminal;
Wherein, the first target object comprises one of the following:
   a first hop SL RLC channel;
   a second hop SL RLC channel;
   an end-to-end bearer between the first terminal and a second terminal;
   The second target object comprises one of the following:
      a first hop SL RLC channel;
      an end-to-end bearer between the first terminal and the second terminal;
      Wherein, the first hop is a direct communication interface and/or link between the first terminal and the relay terminal, and the second hop is a direct communication interface and/or link between the relay terminal and the second terminal;
      The first terminal and the second terminal establish an end-to-end connection through the relay terminal, the first terminal is a terminal that sends data through the relay terminal, and the second terminal is a terminal that receives data through the relay terminal.

In some embodiments, the processor is configured to read the computer program in the memory and perform the following operations:
determining first configuration information, the first configuration information comprising the mapping between the first target object and the second hop LCG ID;
sending the first configuration information to the relay terminal.

In some embodiments, the processor is configured to read the computer program in the memory and perform the following operation:
receiving the first configuration information sent by a second network device, wherein the second network device is a network device serving the first terminal.

In some embodiments, the processor is configured to read the computer program in the memory and perform the following operation:
sending second assistance information to the second network device;
Wherein, the second assistance information comprises at least one of the following:
   a QoS profile of an end-to-end service;
   a layer 2 destination address of the relay terminal;
   a layer 2 source address of the relay terminal;
   an end-to-end layer 2 destination address corresponding to the second terminal;
   an end-to-end layer 2 source address corresponding to the second terminal.

In some embodiments, the first configuration information is carried by at least one of the following signaling:
PC5-RRC signaling;
MAC CE;
SCI.

In some embodiments, the processor is configured to read the computer program in the memory and perform the following operation:
receiving second configuration information sent by the relay terminal, the second configuration information comprising the mapping between the second target object and the first hop LCG ID.

In some embodiments, the second configuration information is carried by at least one of the following signaling:
PC5-RRC signaling;
MAC CE;
SCI.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

Embodiments of the present disclosure provide a network device, comprising: a memory, a transceiver, and a processor:
The memory is configured to store a computer program; the transceiver is configured to receive and send data under the control of the processor; the processor is configured to read the computer program in the memory and perform the following operation:
receiving an SL BSR sent by a relay terminal according to a mapping between a first target object and a second hop LCG ID;
Wherein, the first target object comprises one of the following:
   a first hop SL RLC channel;
   a second hop SL RLC channel;
   an end-to-end bearer between a first terminal and a second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal.

In some embodiments, the processor is configured to read the computer program in the memory and perform the following operation:
sending the mapping between the first target object and the second hop LCG ID to the relay terminal.

In some embodiments, the processor is configured to read the computer program in the memory and perform the following operation:
receiving first assistance information sent by the relay terminal;
Wherein, the first assistance information comprises at least one of the following:
   a QoS profile of an end-to-end service;
   a layer 2 destination address of the relay terminal;
   a layer 2 source address of the relay terminal;
   an end-to-end layer 2 destination address corresponding to the second terminal;
   an end-to-end layer 2 source address corresponding to the second terminal.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

Embodiments of the present disclosure provide a buffer status reporting apparatus, comprising:
a first acquisition unit, configured to acquire a mapping between a first target object and a second hop LCG ID;
a first sending unit, configured to send an SL BSR to a first network device according to the mapping between the first target object and the second hop LCG ID;
Wherein, the first target object comprises one of the following:
   a first hop sidelink SL RLC channel;
   a second hop SL RLC channel;
   an end-to-end bearer between a first terminal and a second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal;
   The first network device is a network device serving the relay terminal.

Embodiments of the present disclosure provide a buffer status reporting apparatus, comprising:
a transmission unit, configured to send a mapping between a first target object and a second hop LCG ID to a relay terminal, or, receive a mapping between a second target object and a first hop LCG ID sent by the relay terminal;
Wherein, the first target object comprises one of the following:
   a first hop SL RLC channel;
   a second hop SL RLC channel;
   an end-to-end bearer between the first terminal and a second terminal;
   The second target object comprises one of the following:
      a first hop SL RLC channel;
      an end-to-end bearer between the first terminal and the second terminal;
      Wherein, the first hop is a direct communication interface and/or link between the first terminal and the relay terminal, and the second hop is a direct communication interface and/or link between the relay terminal and the second terminal;
      The first terminal and the second terminal establish an end-to-end connection through the relay terminal, the first terminal is a terminal that sends data through the relay terminal, and the second terminal is a terminal that receives data through the relay terminal.

Embodiments of the present disclosure provide a buffer status reporting apparatus, comprising:
a first receiving unit, configured to receive an SL BSR sent by a relay terminal according to a mapping between a first target object and a second hop LCG ID;
Wherein, the first target object comprises one of the following:
   a first hop SL RLC channel;
   a second hop SL RLC channel;
   an end-to-end bearer between a first terminal and a second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal.

Embodiments of the present disclosure provide a processor-readable storage medium, having stored thereon a computer program, which when executed by a processor, implements the steps of the buffer status reporting method described above.

The beneficial effects of the above technical solutions of the present disclosure are:
In the embodiments of the present disclosure, in the U2U relay scenario, the relay terminal can acquire the mapping between the first target object and the second hop LCG ID, and thus report the SL BSR to the serving network device according to this mapping, enabling the serving network device to configure direct communication interface resources for data forwarding for the relay terminal based on the SL BSR.

### BRIEF DESCRIPTION OF THE DRAWINGS

FIG. 1 is a schematic diagram of a network-centralized control communication mode according to an embodiment of the present disclosure;
FIG. 2 is a schematic diagram of a sidelink according to an embodiment of the present disclosure;
FIG. 3 is a schematic diagram of UE-to-UE relay according to an embodiment of the present disclosure;
FIG. 4 is a first flowchart of a buffer status reporting method according to an embodiment of the present disclosure;
FIG. 5a is a first schematic diagram of a data transmission process according to an embodiment of the present disclosure;
FIG. 5b is a schematic diagram of a MAC CE according to an embodiment of the present disclosure;
FIG. 6 is a second schematic diagram of a data transmission process according to an embodiment of the present disclosure;
FIG. 7 is a third schematic diagram of a data transmission process according to an embodiment of the present disclosure;
FIG. 8 is a fourth schematic diagram of a data transmission process according to an embodiment of the present disclosure;
FIG. 9 is a second flowchart of a buffer status reporting method according to an embodiment of the present disclosure;
FIG. 10 is a third flowchart of a buffer status reporting method according to an embodiment of the present disclosure;
FIG. 11 is a first structural diagram of a buffer status reporting apparatus according to an embodiment of the present disclosure;
FIG. 12 is a second structural diagram of a buffer status reporting apparatus according to an embodiment of the present disclosure;
FIG. 13 is a third structural diagram of a buffer status reporting apparatus according to an embodiment of the present disclosure;
FIG. 14 is a first structural diagram of a terminal according to an embodiment of the present disclosure;
FIG. 15 is a second structural diagram of a terminal according to an embodiment of the present disclosure;
FIG. 16 is a structural diagram of a network device according to an embodiment of the present disclosure.

### DETAILED DESCRIPTION

To make the technical problems, technical solutions, and advantages to be solved by the present disclosure clearer, the following describes in detail with reference to the accompanying drawings and specific embodiments. In the following description, specific details such as specific configurations and components are provided only to assist in a comprehensive understanding of the embodiments of the present disclosure. Therefore, it should be apparent to those skilled in the art that various changes and modifications can be made to the embodiments described herein without departing from the scope and spirit of the present disclosure. Furthermore, descriptions of known functions and constructions are omitted for clarity and conciseness.

It should be understood that the reference to "one embodiment" or "an embodiment" throughout the specification means that a specific feature, structure, or characteristic related to the embodiment is included in at least one embodiment of the present disclosure. Therefore, the occurrences of "in one embodiment" or "in an embodiment" throughout the specification do not necessarily all refer to the same embodiment. Furthermore, the specific features, structures, or characteristics may be combined in any suitable manner in one or more embodiments.

In the various embodiments of the present disclosure, it should be understood that the sequence numbers of the following processes do not imply an order of execution, and the execution order of each process should be determined by its function and internal logic, and should not constitute any limitation on the implementation process of the embodiments of the present disclosure.

The term "and/or" in the embodiments of the present disclosure describes an association relationship between associated objects, indicating that three relationships may exist. For example, A and/or B may indicate: A exists alone, both A and B exist, and B exists alone. The character "/" generally indicates that the associated objects are in an "or" relationship.

The term "a plurality of' in the embodiments of the present disclosure means two or more, and other quantifiers are similar.

The technical solutions in the embodiments of the present disclosure will be clearly and completely described below with reference to the accompanying drawings in the embodiments of the present disclosure. Obviously, the described embodiments are only a part of the embodiments of the present disclosure, not all of them. Based on the embodiments in the present disclosure, all other embodiments obtained by those of ordinary skill in the art without creative work shall fall within the protection scope of the present disclosure.

When describing the embodiments of the present disclosure, some concepts used in the following description are first explained.

### 1. Cellular Network Communication

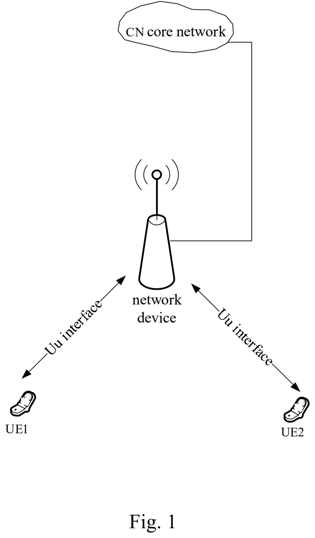

Traditional wireless communication uses a cellular network communication method, where terminals and network-side equipment transmit uplink/downlink data/control information through the Uu interface, as shown in FIG. 1.

### 2. Direct Communication

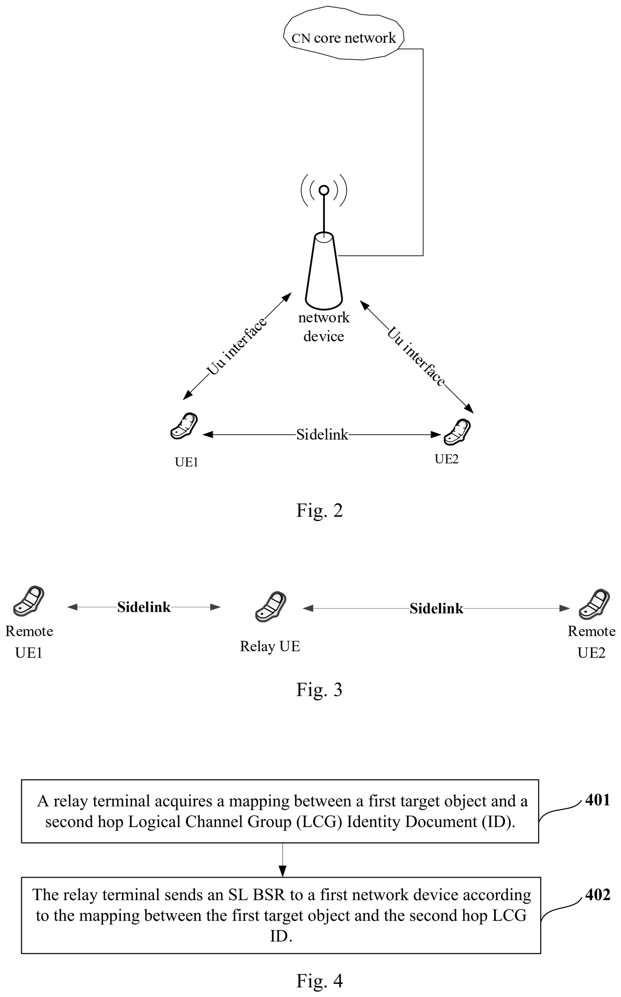

Direct communication refers to a method where neighboring terminals can transmit data over a short distance through a sidelink (also called a sidelink or PC5 link). The radio interface corresponding to the Sidelink is called a direct communication interface (also called a sidelink interface or PC5 interface), as shown in FIG. 2.

### 3. U2U Relay

To extend the coverage of the direct communication interface, UE-to-UE relay (also called U2U relay) is introduced. As shown in FIG. 3, a U2U relay is a terminal with relay functionality (relay UE), and the interface used between the U2U relay and the remote UE is a direct communication interface.

### 4. Direct Communication Interface Resource Allocation Mode

There are two resource allocation modes for the direct communication interface, including: a network-scheduled resource allocation mode and a terminal-autonomously-selected resource allocation mode.

Network-scheduled resource allocation mode: A method where the network device allocates resources to the terminal based on the Sidelink BSR reported by the terminal. It is called Mode 3 in Long Term Evolution (LTE) systems and Mode 1 in New Radio (NR) systems.

Terminal-autonomously-selected resource allocation mode: The terminal autonomously selects resources for sending on the direct communication interface from a resource pool. The resource pool may be pre-configured or configured by the network through broadcast or dedicated signaling. It is called Mode 4 in LTE systems and Mode 2 in NR systems.

Embodiments of the present disclosure provide a buffer status reporting method, apparatus, terminal, and network device, used to solve the problem that a relay UE in a U2U relay scenario cannot obtain direct communication interface resources for data forwarding.

Among them, the method and apparatus are based on the same inventive concept. Since the principles of the method and apparatus for solving problems are similar, the implementation of the apparatus and the method can be referred to each other, and repetitions are not repeated here.

As shown in FIG. 4, an embodiment of the present disclosure provides a buffer status reporting method, applied to a relay terminal, specifically comprising the following steps:
Step 401: A relay terminal acquires a mapping between a first target object and a second hop Logical Channel Group (LCG) Identity Document (ID).
Step 402: The relay terminal sends an SL BSR to a first network device according to the mapping between the first target object and the second hop LCG ID.

Wherein, the first target object comprises one of the following:
a first hop sidelink Sidelink (SL) Radio Link Control (RLC) channel;
a second hop SL RLC channel;
an end-to-end bearer between a first terminal and a second terminal.

Wherein, the first hop is a direct communication interface and/or link between the first terminal and the relay terminal, and the second hop is a direct communication interface and/or link between the relay terminal and the second terminal.

The first terminal and the second terminal establish an end-to-end connection through the relay terminal, the first terminal is a terminal that sends data through the relay terminal, and the second terminal is a terminal that receives data through the relay terminal.

The first network device is a network device serving the relay terminal.

In this embodiment, the first terminal establishes an end-to-end connection with the second terminal through the relay terminal, and the first terminal sends data to the second terminal through the relay terminal. In the U2U relay scenario, the relay terminal acquires the mapping between the first target object and the second hop LCG ID. According to this mapping, it can determine the LCG ID corresponding to the data received from the first terminal when transmitted on the second hop, thereby enabling the relay terminal to use this mapping to send an SL BSR to its serving first network device. The first network device can configure direct communication interface resources corresponding to the second hop for the relay terminal based on the SL BSR.

Wherein, the first target object can be the first hop SL RLC channel, i.e., the SL RLC channel (also called PC5 RLC channel) of the direct communication interface and/or link between the first terminal and the relay terminal. Then the relay terminal acquires the mapping between the first hop SL RLC channel and the second hop LCG ID. According to this mapping, it can determine the LCG ID corresponding to the data received from the first hop SL RLC channel when transmitted on the second hop.

Alternatively, the first target object can be the second hop SL RLC channel, i.e., the SL RLC channel (also called PC5 RLC channel) of the direct communication interface and/or link between the relay terminal and the second terminal. Then the relay terminal acquires the mapping between the second hop SL RLC channel and the second hop LCG ID. According to this mapping, it can directly determine the LCG ID corresponding to the SL RLC channel on the second hop.

Alternatively, the first target object can be the end-to-end bearer between the first terminal and the second terminal. Then the relay terminal acquires the mapping between the end-to-end bearer and the second hop LCG ID. According to this mapping, it can determine the LCG ID corresponding to the data received from the first hop SL RLC channel associated with the end-to-end bearer when transmitted on the second hop, or directly determine the LCG ID corresponding to the second hop SL RLC channel associated with the end-to-end bearer.

In the embodiments of the present disclosure, in the U2U relay scenario, the relay terminal can acquire the mapping between the first target object and the second hop LCG ID, and thus report the SL BSR to the serving network device according to this mapping, enabling the serving network device to configure direct communication interface resources for data forwarding for the relay terminal based on the SL BSR.

As an optional embodiment, the acquiring a mapping between a first target object and a second hop LCG ID comprises:
acquiring the mapping between the first target object and the second hop LCG ID from a first node;
The first node comprises one of the following:
   the first terminal;
   the relay terminal;
   the first network device.

In this embodiment, the relay terminal can acquire the mapping between the first target object and the second hop LCG ID from the first terminal, the relay terminal itself, or the serving first network device.

In some embodiments, in a case where the first node is the first terminal, the acquiring the mapping between the first target object and the second hop LCG ID from the first node comprises: receiving first configuration information sent by the first terminal, the first configuration information comprising the mapping between the first target object and the second hop LCG ID.

In this embodiment, the first terminal can send first configuration information to the relay terminal, and the first configuration information at least comprises the mapping between the first target object and the second hop LCG ID.

In some embodiments, the first configuration information is carried by at least one of the following signaling:
sidelink PC5-Radio Resource Control (RRC) signaling;
Medium Access Control (MAC) Control Element (CE);
Sidelink Control Information (SCI).

The content of the first configuration information may be determined by the first terminal itself, or may be configured for the first terminal by a second network device serving the first terminal. If the content of the first configuration information is configured for the first terminal by the second network device, the first terminal needs to report second assistance information to the second network device. The second assistance information may comprise one or more of the following:
Quality of Service (QoS) profile of the end-to-end service;
Layer 2 destination address of the relay terminal;
Layer 2 source address of the relay terminal;
End-to-end layer 2 (L2) destination address corresponding to the second terminal;
End-to-end layer 2 source address corresponding to the second terminal.

As an optional embodiment, in a case where the first node is the relay terminal or the first node is the first network device, the method further comprises:
sending second configuration information to the first terminal, the second configuration information comprising a mapping between a second target object and a first hop LCG ID;
Wherein, the second target object comprises one of the following:
   a first hop SL RLC channel;
   an end-to-end bearer between the first terminal and the second terminal.

In this embodiment, if the relay terminal itself determines the mapping between the first target object and the second hop LCG ID, or the first network device configures the mapping between the first target object and the second hop LCG ID for the relay terminal, then after obtaining the mapping, the relay terminal can also send the mapping between the second target object and the first hop LCG ID to the first terminal. This enables the first terminal to report an SL BSR to its serving second network device based on the mapping between the second target object and the first hop LCG ID, thereby obtaining the direct communication interface resources used for data transmission on the first hop.

The second target object can be the first hop SL RLC channel, i.e., the relay terminal sends the mapping between the first hop SL RLC channel and the first hop LCG ID to the first terminal. Then the first terminal can determine the mapping between the SL RLC channel and the LCG ID when the first terminal sends data to the relay terminal on the direct communication interface, enabling the first terminal to report an SL BSR to its serving second network device based on this mapping, thereby obtaining the direct communication interface resources used for data transmission on the first hop.

Alternatively, the second target object can also be the end-to-end bearer between the first terminal and the second terminal, i.e., the relay terminal sends the mapping between the end-to-end bearer between the first terminal and the second terminal and the first hop LCG ID to the first terminal. The first terminal can determine the mapping between the SL RLC channel and the LCG ID when the first terminal sends data to the relay terminal on the direct communication interface based on this mapping, enabling the first terminal to report an SL BSR to its serving second network device based on this mapping, thereby obtaining the direct communication interface resources used for data transmission on the first hop.

Specifically, when the relay terminal sends the mapping between the second target object and the first hop LCG ID to the first terminal, it can send second configuration information, which at least includes the mapping between the second target object and the first hop LCG ID.

In some embodiments, the second configuration information is carried by at least one of the following signaling:
PC5-RRC signaling;
MAC CE;
SCI.

As an optional embodiment, in a case where the first node is the first network device, the method further comprises:
sending first assistance information to the first network device;
Wherein, the first assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

In this embodiment, if the relay terminal needs to acquire the mapping between the first target object and the second hop LCG ID from the serving first network device, the relay terminal first needs to send first assistance information to the first network device. The first network device can determine direct communication interface configuration information for the relay terminal based on this first assistance information, which includes the mapping between the first target object and the second hop LCG ID.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In this embodiment, the first hop SL RLC channel can be identified by one or more of the above.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

In this embodiment, the second hop SL RLC channel can be identified by one or more of the above.

After the relay terminal obtains the mapping between the first target object and the second hop LCG ID, it can determine the second hop LCG ID corresponding to the first target object for SL BSR reporting, thus enabling SL BSR reporting. The first network device can allocate direct communication interface resources on the second hop for the relay terminal based on the SL BSR, and the relay terminal uses these direct communication interface resources to send data to the second terminal.

Assume that the first terminal and the second terminal are connected via a U2U relay, where the first terminal is the terminal sending data via the U2U relay, and the second terminal is the terminal receiving data via the U2U relay. The following specific embodiments illustrate the execution methods for the terminal acquiring the mapping between the first target object and the second hop LCG ID from different nodes.

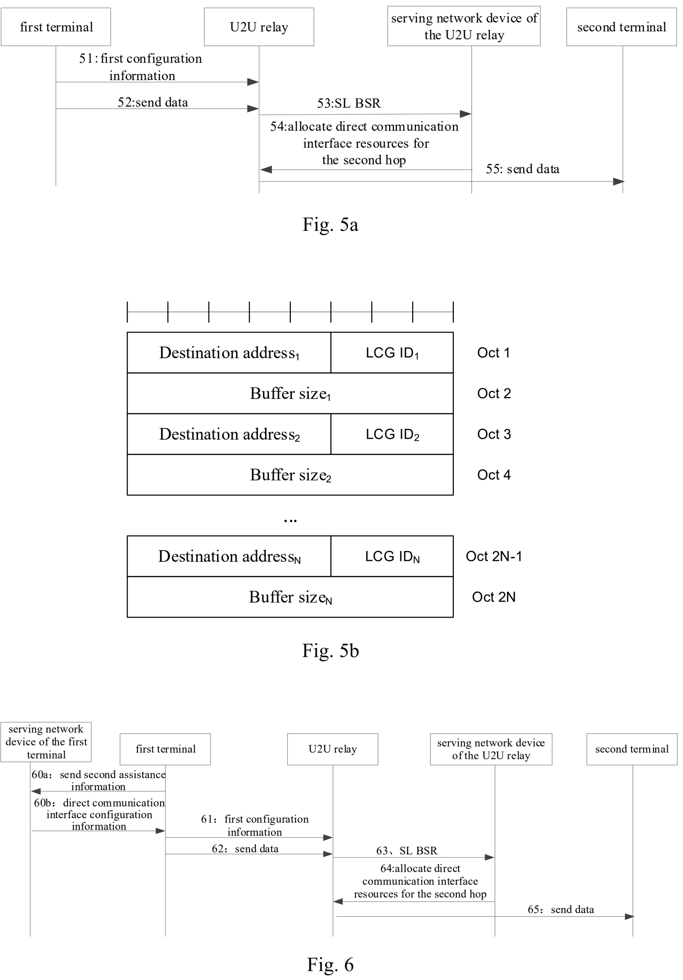

As an optional embodiment, the first node is the first terminal, and the first terminal determines the first configuration information itself, as shown in FIG. 5a, comprising:
Step 51: The first terminal sends first configuration information to the U2U relay.

The first configuration information at least contains the mapping between the first target object and the second hop LCG ID. The second hop refers to the direct communication interface and/or link between the U2U relay and the terminal receiving data via the U2U relay (i.e., the second terminal). The first target object includes, but is not limited to, one of the following:
First hop SL RLC channel;
Second hop SL RLC channel;
End-to-end bearer between the first terminal and the second terminal.

In this step, the first terminal determines the first configuration information based on its own implementation. Specifically, the first configuration information can be carried by at least one of PC5-RRC signaling, MAC CE, and SCI.

Step 52: The first terminal sends data to the U2U relay.

If the terminal-autonomously-selected resource allocation mode (mode 2) is used on the direct communication interface between the first terminal and the U2U relay, the first terminal autonomously selects direct communication interface resources and uses these resources to send data to the U2U relay.

If the network-scheduled resource allocation mode (mode 1) is used on the direct communication interface between the first terminal and the U2U relay, the first terminal needs to send a Scheduling Request (SR)/SL BSR to its serving network device and then obtain direct communication interface resources from the serving network device. In this step, the mapping relationship between LCH and LCG ID in the SL BSR is determined based on the first terminal's own implementation.

Step 53: The U2U relay sends an SL BSR to the serving network device of the U2U relay.

In this step, after receiving the first configuration information from the first terminal, the U2U relay determines the mapping between the first target object and the second hop LCG ID based on the first configuration information.

Specifically, the operation of the U2U relay may vary depending on the first target object. Details are as follows:
If the first target object is the first hop SL RLC channel, the U2U relay needs to determine the LCG ID corresponding to the second hop SL RLC channel based on the mapping relationship between the first hop SL RLC channel and the second hop SL RLC channel and the first configuration information.

If the first target object is the second hop SL RLC channel, the U2U relay can directly determine the LCG ID corresponding to the second hop SL RLC channel based on the first configuration information.

If the first target object is the end-to-end bearer between the first terminal and the second terminal, the U2U relay determines the LCG ID corresponding to the second hop SL RLC channel based on the mapping relationship between the end-to-end bearer and the second hop SL RLC channel and the first configuration information.

After the U2U relay determines the LCG ID corresponding to the second hop SL RLC channel, it can perform SL BSR reporting for the second hop based on the mapping relationship between the SL RLC channel and the LCG ID.

In some embodiments, the U2U relay can use a MAC CE to report the SL BSR. The format of the MAC CE is shown in FIG. 5b, where:
Destination Index is used to identify the direct communication destination address;
LCG ID: used to identify the logical channel group;
Buffer size: used to identify the amount of data corresponding to the logical channel group.

Step 54: The serving network device of the U2U relay allocates direct communication interface resources for the second hop to the U2U relay.

In this step, the serving network device of the U2U relay receives the SL BSR reported by the U2U relay and allocates direct communication interface resources for the second hop to the U2U relay.

Step 55: The U2U relay sends data to the second terminal.

In this step, the U2U relay can use the direct communication interface resources to forward the data received from the first terminal to the second terminal.

As an optional embodiment, the first node is the first terminal, and the serving network device of the first terminal determines the first configuration information, as shown in FIG. 6, comprising:
Step 60a: The first terminal sends second assistance information to its serving network device.

The second assistance information may contain one or more of the following:
QoS profile of the end-to-end service;
L2 destination address of the Relay UE;
L2 source address of the Relay UE;
End-to-end L2 destination address corresponding to the target terminal (i.e., the second terminal) communicating via the U2U relay;
End-to-end L2 source address corresponding to the target terminal communicating via the U2U relay.

The second assistance information may be SidelinkUEInformation or a newly introduced RRC message, which is not specifically limited.

Step 60b: The first terminal acquires direct communication interface configuration information from its serving network device.

After receiving the second assistance information, the serving network device of the first terminal determines the direct communication interface configuration information (i.e., the first configuration information). How to determine the direct communication interface configuration information depends on the network device implementation.

The serving network device of the first terminal determines the direct communication interface configuration information and then sends this configuration information to the first terminal. The direct communication interface configuration information at least contains the mapping between the first target object and the second hop LCG ID. The second hop refers to the direct communication interface and/or link between the U2U relay and the terminal receiving data via the U2U relay. In some embodiments, the direct communication interface configuration information may also contain the mapping relationship between the second target object and the first hop LCG ID.

Wherein, the second target object includes, but is not limited to, one of the following:
First hop SL RLC channel;
End-to-end bearer between the first terminal and the second terminal.

Step 61: The first terminal sends first configuration information to the U2U relay.

In some embodiments, the first configuration information at least contains the mapping between the first target object and the second hop LCG ID. The second hop refers to the direct communication interface and/or link between the U2U relay and the terminal receiving data via the U2U relay. The first target object includes, but is not limited to, one of the following:
First hop SL RLC channel;
Second hop SL RLC channel;
End-to-end bearer between the first terminal and the second terminal.

In this embodiment, the first terminal determines the first configuration information based on its own implementation. Specifically, the first configuration information can be carried by at least one of PC5-RRC signaling, MAC CE, and SCI.

Step 62: The first terminal sends data to the U2U relay.

If the terminal-autonomously-selected resource allocation mode (mode 2) is used on the direct communication interface between the first terminal and the U2U relay, the first terminal autonomously selects direct communication interface resources and uses these resources to send data to the U2U relay.

If the network-scheduled resource allocation mode (mode 1) is used on the direct communication interface between the first terminal and the U2U relay, the first terminal needs to send an SR/SL BSR to its serving network device and then obtain direct communication interface resources from the serving network device. In this step, the mapping relationship between LCH and LCG ID in the SL BSR is determined based on the first terminal's own implementation.

Step 63: The U2U relay sends an SL BSR to the serving network device of the U2U relay.

In this step, after receiving the first configuration information from the first terminal, the U2U relay determines the mapping between the first target object and the second hop LCG ID based on the first configuration information.

Specifically, the operation of the U2U relay may vary depending on the first target object. Details are as follows:
If the first target object is the first hop SL RLC channel, the U2U relay can determine the LCG ID corresponding to the second hop SL RLC channel based on the mapping relationship between the first hop SL RLC channel and the second hop SL RLC channel and the first configuration information.

If the first target object is the second hop SL RLC channel, the U2U relay can directly determine the LCG ID corresponding to the second hop SL RLC channel based on the first configuration information.

If the first target object is the end-to-end bearer between the first terminal and the second terminal, the U2U relay determines the LCG ID corresponding to the second hop SL RLC channel based on the mapping relationship between the end-to-end bearer and the second hop SL RLC channel and the first configuration information.

After the U2U relay determines the LCG ID corresponding to the second hop SL RLC channel, it can perform SL BSR reporting for the second hop based on the mapping relationship between the SL RLC channel and the LCG ID.

Step 64: The serving network device of the U2U relay allocates direct communication interface resources for the second hop to the U2U relay.

In this step, after receiving the SL BSR reported by the U2U relay, the serving network device of the U2U relay allocates direct communication interface resources for the second hop to the U2U relay.

Step 65: The U2U relay sends data to the second terminal.

In this step, the U2U relay can use the direct communication interface resources to forward the data received from the first terminal to the second terminal.

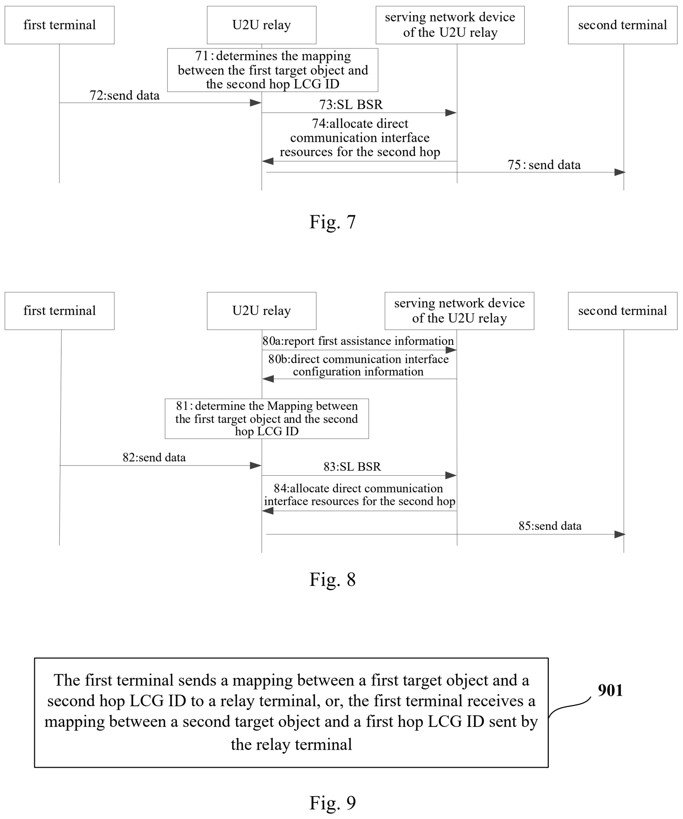

As an optional embodiment, the first node is the relay terminal, i.e., the relay terminal itself determines the mapping between the first target object and the second hop LCG ID, as shown in FIG. 7, comprising:
Step 71: The U2U relay determines the mapping between the first target object and the second hop LCG ID.

How to determine the mapping between the first target object and the second hop LCG ID specifically depends on the U2U relay implementation. In some embodiments, the first terminal may also provide assistance information to the U2U relay, such as the QoS profile of the end-to-end service, etc. The U2U relay can determine the mapping based on the assistance information.

The first target object includes, but is not limited to, one of the following:
First hop SL RLC channel;
Second hop SL RLC channel;
End-to-end bearer between the first terminal and the second terminal.

Step 72: The first terminal sends data to the U2U relay.

If the terminal-autonomously-selected resource allocation mode (mode 2) is used on the direct communication interface between the first terminal and the U2U relay, the first terminal autonomously selects direct communication interface resources and uses these resources to send data to the U2U relay.

If the network-scheduled resource allocation mode (mode 1) is used on the direct communication interface between the first terminal and the U2U relay, the first terminal needs to send an SR/SL BSR to its serving network device and then obtain direct communication interface resources from the serving network device. In this step, the mapping relationship between LCH and LCG ID in the SL BSR can be determined by the Relay UE and configured to the first terminal via the direct communication interface.

Step 73: The U2U relay sends an SL BSR to the serving network device of the U2U relay.

The U2U relay determines the mapping between the first target object and the second hop LCG ID. Specifically, the operation of the U2U relay may vary depending on the first target object. Details are as follows:
If the first target object is the first hop SL RLC channel, the U2U relay can determine the LCG ID corresponding to the second hop SL RLC channel based on the mapping relationship between the first hop SL RLC channel and the second hop SL RLC channel and the first configuration information.

If the first target object is the second hop SL RLC channel, the U2U relay can directly determine the LCG ID corresponding to the second hop SL RLC channel based on the first configuration information.

If the first target object is the end-to-end bearer between the first terminal and the second terminal, the U2U relay determines the LCG ID corresponding to the second hop SL RLC channel based on the mapping relationship between the end-to-end bearer and the second hop SL RLC channel and the first configuration information.

After the U2U relay determines the LCG ID corresponding to the second hop SL RLC channel, it can perform SL BSR reporting for the second hop based on the mapping relationship between the SL RLC channel and the LCG ID.

Step 74: The serving network device of the U2U relay allocates direct communication interface resources for the second hop to the U2U relay.

In this step, the serving network device of the U2U relay receives the SL BSR reported by the U2U relay and allocates direct communication interface resources for the second hop to the U2U relay.

Step 75: The U2U relay sends data to the second terminal.

In this step, the U2U relay can use the direct communication interface resources to forward the data received from the first terminal to the second terminal.

As an optional embodiment, the first node is the serving network device of the relay terminal, as shown in FIG. 8, comprising:
Step 80a: The U2U relay reports first assistance information to its serving network device.

In some embodiments, the first assistance information contains one or more of the following:
QoS profile of the end-to-end service;
L2 destination address of the Relay UE;
L2 source address of the Relay UE;
End-to-end L2 destination address corresponding to the target terminal (i.e., the second terminal) communicating via the U2U relay;
End-to-end L2 source address corresponding to the target terminal communicating via the U2U relay.

Specifically, the first assistance information may be SidelinkUEInformation or a newly introduced RRC message, which is not specifically limited.

Step 80b: The U2U relay acquires direct communication interface configuration information from its serving network device.

After receiving the first assistance information reported by the U2U relay, the serving network device of the U2U relay determines the direct communication interface configuration information. How to determine the direct communication interface configuration information depends on the network device implementation.

The serving network device of the U2U relay determines the direct communication interface configuration information and then sends this configuration information to the U2U relay. The direct communication interface configuration information at least contains the mapping between the first target object and the second hop LCG ID. In some embodiments, the direct communication interface configuration information may also contain the mapping relationship between the second target object and the first hop LCG ID. If the direct communication interface configuration information contains the mapping relationship between the second target object and the first hop LCG ID, the U2U relay can notify the first terminal of this mapping relationship via the direct communication interface.

Wherein, the second target object includes, but is not limited to, one of the following:
First hop SL RLC channel;
End-to-end bearer between the first terminal and the second terminal.

Step 81: The U2U relay determines the mapping between the first target object and the second hop LCG ID.

How to determine the mapping specifically depends on the U2U relay implementation. In some embodiments, the first terminal may provide assistance information to the U2U relay, such as the QoS profile of the end-to-end service, etc. The U2U relay can determine the mapping between the first target object and the second hop LCG ID based on the assistance information.

Wherein, the first target object includes, but is not limited to, one of the following:
First hop SL RLC channel;
Second hop SL RLC channel;
End-to-end bearer between the first terminal and the second terminal.

Step 82: The first terminal sends data to the U2U relay.

If the terminal-autonomously-selected resource allocation mode (mode 2) is used on the direct communication interface between the first terminal and the U2U relay, the first terminal autonomously selects direct communication interface resources and uses these resources to send data to the U2U relay.

If the network-scheduled resource allocation mode (mode 1) is used on the direct communication interface between the first terminal and the U2U relay, the first terminal needs to send an SR/SL BSR to its serving network device and then obtain direct communication interface resources from the serving network device. In this step, the mapping relationship between LCH and LCG ID in the SL BSR can be determined by the U2U relay and configured to the first terminal via the direct communication interface.

Step 83: The U2U relay sends an SL BSR to the serving network device of the U2U relay.

The U2U relay determines the mapping between the first target object and the second hop LCG ID. Specifically, the operation of the U2U relay may vary depending on the first target object. Details are as follows:
If the first target object is the first hop SL RLC channel, the U2U relay needs to determine the LCG ID corresponding to the second hop SL RLC channel based on the mapping relationship between the first hop SL RLC channel and the second hop SL RLC channel and the first configuration information.

If the first target object is the second hop SL RLC channel, the U2U relay can directly determine the LCG ID corresponding to the second hop SL RLC channel based on the first configuration information.

If the first target object is the end-to-end bearer between the first terminal and the second terminal, the U2U relay determines the LCG ID corresponding to the second hop SL RLC channel based on the mapping relationship between the end-to-end bearer and the second hop SL RLC channel and the first configuration information.

After the U2U relay determines the LCG ID corresponding to the second hop SL RLC channel, it can perform SL BSR reporting for the second hop based on the mapping relationship between the SL RLC channel and the LCG ID.

Step 84: The serving network device of the U2U relay allocates direct communication interface resources for the second hop to the U2U relay.

In this step, the serving network device of the U2U relay receives the SL BSR reported by the U2U relay and allocates direct communication interface resources for the second hop to the U2U relay.

Step 85: The U2U relay sends data to the second terminal.

In this step, the U2U relay can use the direct communication interface resources to forward the data received from the first terminal to the second terminal.

In the embodiments of the present disclosure, in the U2U relay scenario, the relay UE acquires the mapping between the first target object and the second hop LCG ID from the first node, and thus can determine the LCG ID corresponding to the first target object on the second hop based on this mapping. Thereby, it can use this mapping to report an SL BSR to the network device serving the relay UE. The serving network device of the relay UE configures direct communication interface resources for the relay UE to use when sending data to the second terminal, ensuring normal resource allocation.

In the U2U relay scenario, the relay terminal can acquire the mapping between the first target object and the second hop LCG ID, and thus report the SL BSR to the serving network device according to this mapping, enabling the serving network device to configure direct communication interface resources for data forwarding for the relay terminal based on the SL BSR.

As shown in FIG. 9, an embodiment of the present disclosure also provides a buffer status reporting method, applied to a first terminal, the method comprising:
Step 901: A first terminal sends a mapping between a first target object and a second hop LCG ID to a relay terminal, or, the first terminal receives a mapping between a second target object and a first hop LCG ID sent by the relay terminal.

Wherein, the first target object comprises one of the following:
a first hop SL RLC channel;
a second hop SL RLC channel;
an end-to-end bearer between the first terminal and a second terminal;
The second target object comprises one of the following:
   a first hop SL RLC channel;
   an end-to-end bearer between the first terminal and the second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal.

In this embodiment, the first terminal establishes an end-to-end connection with the second terminal through the relay terminal, and the first terminal sends data to the second terminal through the relay terminal. In the U2U relay scenario, the relay terminal acquires the mapping between the first target object and the second hop LCG ID. According to this mapping, it can determine the LCG ID corresponding to the first target object on the second hop, and thus can report an SL BSR to its serving first network device. The first network device can configure direct communication interface resources from the relay terminal to the second terminal for the relay terminal based on the SL BSR.

Wherein, the relay terminal can acquire the mapping between the first target object and the second hop LCG ID from a first node. The first node can be the first terminal, the relay terminal itself, or the serving first network device. If the first node is the first terminal, the first terminal sends the mapping between the first target object and the second hop LCG ID to the relay terminal. If the first node is the relay terminal itself or the serving first network device, after acquiring the mapping between the first target object and the second hop LCG ID, the relay terminal can also send the mapping between the second target object and the first hop LCG ID to the first terminal, enabling the first terminal to determine the LCG ID corresponding to the second target object on the first hop.

Wherein, the first target object can be the first hop SL RLC channel, i.e., the SL RLC channel of the direct communication interface and/or link between the first terminal and the relay terminal; or, the first target object can be the second hop SL RLC channel, i.e., the SL RLC channel of the direct communication interface and/or link between the relay terminal and the second terminal. Or, the first target object can be the end-to-end bearer between the first terminal and the second terminal.

The second target object can be the first hop SL RLC channel, i.e., the first terminal can acquire the mapping between the SL RLC channel of the direct communication interface and/or link between the first terminal and the relay terminal and the first hop LCG ID; the second target object can be the end-to-end bearer between the first terminal and the second terminal, i.e., the first terminal can acquire the mapping between the end-to-end bearer between the first terminal and the second terminal and the first hop LCG ID, and thus can report an SL BSR to its serving second network device based on this mapping, thereby obtaining the direct communication interface resources used for data transmission on the first hop.

In the embodiments of the present disclosure, in the U2U relay scenario, the first terminal can provide the mapping between the first target object and the second hop LCG ID to the relay terminal, enabling the relay terminal to report the SL BSR to the serving network device according to this mapping, so that the serving network device can configure direct communication interface resources for data forwarding for the relay terminal based on the SL BSR. The relay terminal can provide the mapping between the second target object and the first hop LCG ID to the first terminal, enabling the first terminal to send data to the relay terminal based on this mapping.

As an optional embodiment, the sending a mapping between a first target object and a second hop LCG ID to a relay terminal comprises:
determining first configuration information, the first configuration information comprising the mapping between the first target object and the second hop LCG ID; sending the first configuration information to the relay terminal.

In some embodiments, the determining first configuration information comprises:
receiving the first configuration information sent by a second network device, wherein the second network device is a network device serving the first terminal.

In some embodiments, the first configuration information is carried by at least one of the following signaling:
PC5-RRC signaling;
MAC CE;
SCI.

In this embodiment, the first terminal can send first configuration information to the relay terminal, and the first configuration information at least comprises the mapping between the first target object and the second hop LCG ID. The content of the first configuration information can be determined by the first terminal itself, or can be configured for the first terminal by the second network device serving the first terminal. If the content of the first configuration information is configured for the first terminal by the serving second network device, the first terminal needs to report second assistance information to the second network device, and the second network device can determine the first configuration information based on the second assistance information.

In some embodiments, the method further comprises:
sending second assistance information to the second network device;
Wherein, the second assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

As an optional embodiment, the receiving a mapping between a second target object and a first hop LCG ID sent by the relay terminal comprises: receiving second configuration information sent by the relay terminal, the second configuration information comprising the mapping between the second target object and the first hop LCG ID.

In some embodiments, the second configuration information is carried by at least one of the following signaling:
PC5-RRC signaling;
MAC CE;
SCI.

In this embodiment, if the relay terminal itself determines the mapping between the first target object and the second hop LCG ID, or the first network device configures the mapping between the first target object and the second hop LCG ID for the relay terminal, then after obtaining the mapping, the relay terminal can also send the mapping between the second target object and the first hop LCG ID to the first terminal. This enables the first terminal to report an SL BSR to the second network device serving the first terminal based on the mapping between the second target object and the first hop LCG ID, and obtain the direct communication interface resources for the first terminal to send data to the relay terminal on the first hop from the second network device.

Specifically, when the relay terminal sends the mapping between the second target object and the first hop LCG ID to the first terminal, it can send second configuration information, which at least includes the mapping between the second target object and the first hop LCG ID.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

In the embodiments of the present disclosure, in the U2U relay scenario, the first terminal can provide the mapping between the first target object and the second hop LCG ID to the relay terminal, enabling the relay terminal to report the SL BSR to the serving network device according to this mapping, so that the serving network device can configure direct communication interface resources for data forwarding for the relay terminal based on the SL BSR. The relay terminal can provide the mapping between the second target object and the first hop LCG ID to the first terminal, enabling the first terminal to send data to the relay terminal based on this mapping.

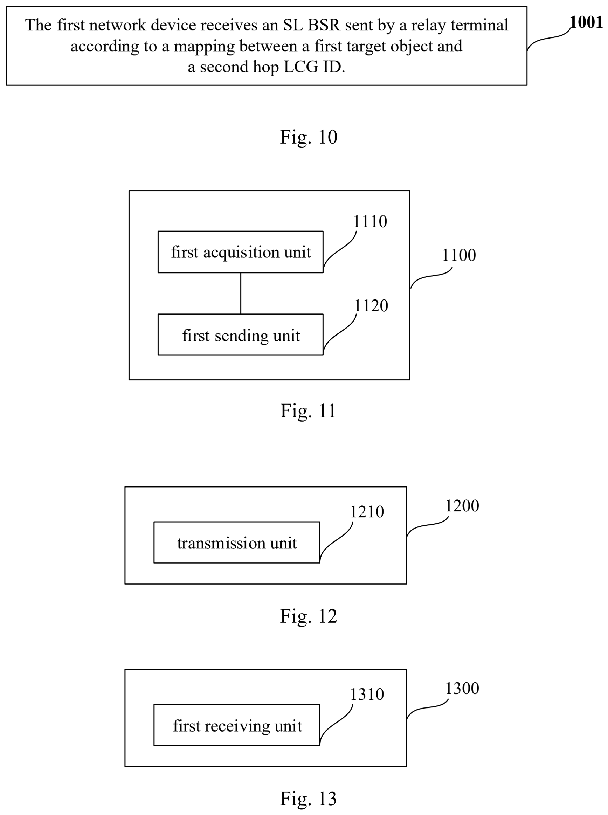

As shown in FIG. 10, an embodiment of the present disclosure also provides a buffer status reporting method, applied to a first network device, the method comprising:
Step 1001: A first network device receives an SL BSR sent by a relay terminal according to a mapping between a first target object and a second hop LCG ID.

Wherein, the first target object comprises one of the following:
a first hop SL RLC channel;
a second hop SL RLC channel;
an end-to-end bearer between a first terminal and a second terminal;
Wherein, the first hop is a direct communication interface and/or link between the first terminal and the relay terminal, and the second hop is a direct communication interface and/or link between the relay terminal and the second terminal;
The first terminal and the second terminal establish an end-to-end connection through the relay terminal, the first terminal is a terminal that sends data through the relay terminal, and the second terminal is a terminal that receives data through the relay terminal.

The first network device is a network device serving the relay terminal.

In this embodiment, in the U2U relay scenario, the relay terminal acquires the mapping between the first target object and the second hop LCG ID. According to this mapping, it can determine the second hop LCG ID, and thus send an SL BSR to its serving first network device on the logical channel of the second hop. The first network device can configure direct communication interface resources corresponding to the second hop for the relay terminal based on the SL BSR.

In some embodiments, the method further comprises: sending the mapping between the first target object and the second hop LCG ID to the relay terminal. In this embodiment, the first network device can configure the mapping between the first target object and the second hop LCG ID for the relay terminal. After the relay terminal acquires the mapping, it can report the SL BSR to the first network device according to this mapping.

In some embodiments, the method further comprises:
receiving first assistance information sent by the relay terminal;
Wherein, the first assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

In this embodiment, the relay terminal can acquire the mapping between the first target object and the second hop LCG ID from the first terminal, the relay terminal itself, or the serving first network device. When the relay terminal needs to acquire the mapping between the first target object and the second hop LCG ID from the first network device, the relay terminal can send first assistance information to the first network device. The first network device can determine direct communication interface configuration information for the relay terminal based on this first assistance information, which includes the mapping between the first target object and the second hop LCG ID. After the relay terminal obtains the mapping between the first target object and the second hop LCG ID, it can report the SL BSR to the first network device based on this mapping. The first network device can configure the direct communication interface resources used by the relay terminal to forward data to the second terminal based on the SL BSR.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

In the embodiments of the present disclosure, in the U2U relay scenario, the relay terminal can acquire the mapping between the first target object and the second hop LCG ID, and thus report the SL BSR to the first network device according to this mapping, enabling the first network device to configure the direct communication interface resources used by the relay terminal to forward data to the second terminal based on the SL BSR. The mapping between the first target object and the second hop LCG ID can be configured by the first network device.

The above embodiments introduce the buffer status reporting method of the present disclosure. The following embodiments will further describe the corresponding apparatus with reference to the accompanying drawings.

Specifically, as shown in FIG. 11, an embodiment of the present disclosure provides a buffer status reporting apparatus 1100, applied to a relay terminal, comprising:
A first acquisition unit 1110, configured to acquire a mapping between a first target object and a second hop LCG ID.

A first sending unit 1120, configured to send an SL BSR to a first network device according to the mapping between the first target object and the second hop LCG ID.

Wherein, the first target object comprises one of the following:
a first hop SL RLC channel;
a second hop SL RLC channel;
an end-to-end bearer between a first terminal and a second terminal;
Wherein, the first hop is a direct communication interface and/or link between the first terminal and the relay terminal, and the second hop is a direct communication interface and/or link between the relay terminal and the second terminal;
The first terminal and the second terminal establish an end-to-end connection through the relay terminal, the first terminal is a terminal that sends data through the relay terminal, and the second terminal is a terminal that receives data through the relay terminal;
The first network device is a network device serving the relay terminal.

In some embodiments, the first acquisition unit is specifically configured to:
acquire the mapping between the first target object and the second hop LCG ID from a first node;
The first node comprises one of the following:
   the first terminal;
   the relay terminal;
   the first network device.

In some embodiments, in a case where the first node is the first terminal, the first acquisition unit is specifically configured to:
receive first configuration information sent by the first terminal, the first configuration information comprising the mapping between the first target object and the second hop LCG ID.

In some embodiments, in a case where the first node is the relay terminal or the first node is the first network device, the apparatus further comprises:
a second sending unit, configured to send second configuration information to the first terminal, the second configuration information comprising a mapping between a second target object and a first hop LCG ID;
Wherein, the second target object comprises one of the following:
   a first hop SL RLC channel;
   an end-to-end bearer between the first terminal and the second terminal.

In some embodiments, the apparatus further comprises:
a third sending unit, configured to, in a case where the first node is the first network device, send first assistance information to the first network device;
Wherein, the first assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

In some embodiments, the first configuration information is carried by at least one of the following signaling:
sidelink PC5-RRC signaling;
MAC CE;
SCI.

In some embodiments, the second configuration information is carried by at least one of the following signaling:
PC5-RRC signaling;
MAC CE;
SCI.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

It should be noted here that the apparatus provided by the embodiments of the present disclosure can implement all the method steps implemented by the method embodiments applied to the relay terminal and achieve the same technical effects. Details and beneficial effects that are the same as those in the method embodiments are not repeated in this embodiment.

Specifically, as shown in FIG. 12, an embodiment of the present disclosure provides a buffer status reporting apparatus 1200, applied to a first terminal, comprising:
A transmission unit 1210, configured to send a mapping between a first target object and a second hop LCG ID to a relay terminal, or, receive a mapping between a second target object and a first hop LCG ID sent by the relay terminal.

Wherein, the first target object comprises one of the following:
a first hop SL RLC channel;
a second hop SL RLC channel;
an end-to-end bearer between the first terminal and a second terminal;
The second target object comprises one of the following:
   a first hop SL RLC channel;
   an end-to-end bearer between the first terminal and the second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal.

In some embodiments, the transmission unit comprises:
a determination subunit, configured to determine first configuration information, the first configuration information comprising the mapping between the first target object and the second hop LCG ID;
a sending subunit, configured to send the first configuration information to the relay terminal.

In some embodiments, the determination subunit is specifically configured to:
receive the first configuration information sent by a second network device, wherein the second network device is a network device serving the first terminal.

In some embodiments, the apparatus further comprises:
a fourth sending unit, configured to send second assistance information to the second network device;
Wherein, the second assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

In some embodiments, the first configuration information is carried by at least one of the following signaling:
PC5-RRC signaling;
MAC CE;
SCI.

In some embodiments, the transmission unit is specifically configured to:
receive second configuration information sent by the relay terminal, the second configuration information comprising the mapping between the second target object and the first hop LCG ID.

In some embodiments, the second configuration information is carried by at least one of the following signaling:
PC5-RRC signaling;
MAC CE;
SCI.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

It should be noted here that the apparatus provided by the embodiments of the present disclosure can implement all the method steps implemented by the method embodiments applied to the first terminal and achieve the same technical effects. Details and beneficial effects that are the same as those in the method embodiments are not repeated in this embodiment.

Specifically, as shown in FIG. 13, an embodiment of the present disclosure provides a buffer status reporting apparatus 1300, applied to a first network device, comprising:
A first receiving unit 1310, configured to receive an SL BSR sent by a relay terminal according to a mapping between a first target object and a second hop LCG ID.

Wherein, the first target object comprises one of the following:
a first hop SL RLC channel;
a second hop SL RLC channel;
an end-to-end bearer between a first terminal and a second terminal;
Wherein, the first hop is a direct communication interface and/or link between the first terminal and the relay terminal, and the second hop is a direct communication interface and/or link between the relay terminal and the second terminal;
The first terminal and the second terminal establish an end-to-end connection through the relay terminal, the first terminal is a terminal that sends data through the relay terminal, and the second terminal is a terminal that receives data through the relay terminal.

In some embodiments, the apparatus further comprises:
a fifth sending unit, configured to send the mapping between the first target object and the second hop LCG ID to the relay terminal.

In some embodiments, the apparatus further comprises:
a second receiving unit, configured to receive first assistance information sent by the relay terminal;
Wherein, the first assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

It should be noted here that the apparatus provided by the embodiments of the present disclosure can implement all the method steps implemented by the method embodiments applied to the first network device and achieve the same technical effects. Details and beneficial effects that are the same as those in the method embodiments are not repeated in this embodiment.

It should be noted that the division of units in the embodiments of the present disclosure is schematic, and is only a division of logical functions. There may be another division manner in actual implementation. In addition, each functional unit in the various embodiments of the present disclosure may be integrated into one processing unit, or each unit may exist physically separately, or two or more units may be integrated into one unit. The above integrated unit may be implemented in the form of hardware or in the form of a software functional unit.

If the integrated unit is implemented in the form of a software functional unit and sold or used as an independent product, it may be stored in a processor-readable storage medium. Based on such understanding, the essential part, or the part contributing to the related art, or all or part of the technical solution of the present disclosure may be embodied in the form of a software product. The computer software product is stored in a storage medium and comprises several instructions for causing a computer device (which may be a personal computer, a server, or a network device, etc.) or a processor to execute all or part of the steps of the methods described in the various embodiments of the present disclosure. The foregoing storage medium includes: U disk, mobile hard disk, Read-Only Memory (ROM), Random Access Memory (RAM), magnetic disk, or optical disk, and other various media that can store program codes.

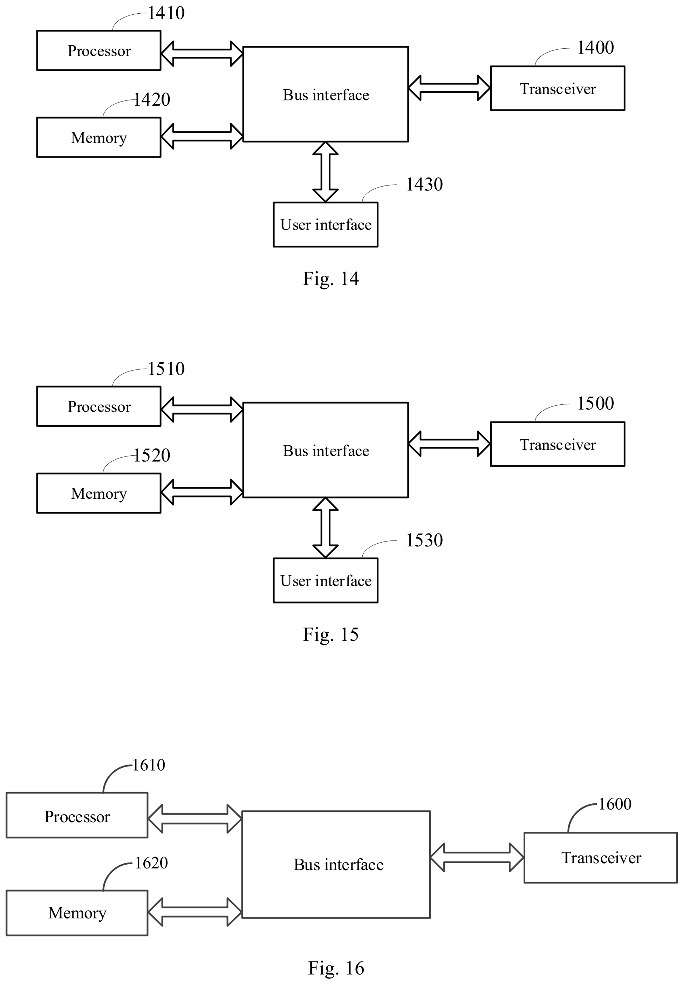

As shown in FIG. 14, an embodiment of the present disclosure also provides a terminal. The terminal is a relay terminal, comprising: a memory 1420, a transceiver 1400, and a processor 1410. Wherein, the memory 1420 is configured to store a computer program; the transceiver 1400 is configured to receive and send data under the control of the processor 1410; the processor 1410 is configured to read the computer program in the memory and perform the following operations:
acquiring a mapping between a first target object and a second hop LCG ID;
sending an SL BSR to a first network device according to the mapping between the first target object and the second hop LCG ID;
Wherein, the first target object comprises one of the following:
   a first hop sidelink SL RLC channel;
   a second hop SL RLC channel;
   an end-to-end bearer between a first terminal and a second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal;
   The first network device is a network device serving the relay terminal.

In some embodiments, the processor is configured to read the computer program in the memory and perform the following operation:
acquiring the mapping between the first target object and the second hop LCG ID from a first node;
The first node comprises one of the following:
   the first terminal;
   the relay terminal;
   the first network device.

In some embodiments, the processor is configured to read the computer program in the memory and perform the following operation:
receiving first configuration information sent by the first terminal, the first configuration information comprising the mapping between the first target object and the second hop LCG ID.

In some embodiments, the processor is configured to read the computer program in the memory and perform the following operation:
sending second configuration information to the first terminal, the second configuration information comprising a mapping between a second target object and a first hop LCG ID;
Wherein, the second target object comprises one of the following:
   a first hop SL RLC channel;
   an end-to-end bearer between the first terminal and the second terminal.

In some embodiments, the processor is configured to read the computer program in the memory and perform the following operation:
sending first assistance information to the first network device;
Wherein, the first assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

In some embodiments, the first configuration information is carried by at least one of the following signaling:
sidelink PC5-RRC signaling;
MAC CE;
SCI.

In some embodiments, the second configuration information is carried by at least one of the following signaling:
PC5-RRC signaling;
MAC CE;
SCI.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

In FIG. 14, the bus architecture may include any number of interconnected buses and bridges, specifically linking various circuits represented by the processor 1410 and the memory 1420. The bus architecture may also link various other circuits such as peripherals, voltage regulators, and power management circuits, which are well known in the art, and therefore will not be further described herein. The bus interface provides an interface. The transceiver 1400 may be multiple elements, i.e., including a transmitter and a transceiver, providing units for communicating with various other apparatuses over a transmission medium. For different user equipment, the user interface 1430 may also be an interface capable of externally or internally connecting necessary devices, including but not limited to a keypad, display, speaker, microphone, joystick, etc.

The processor 1410 is responsible for managing the bus architecture and general processing, and the memory 1420 may store data used by the processor 1410 when performing operations.

In some embodiments, the processor 1410 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor, by calling the computer program stored in the memory, is configured to execute, according to the obtained executable instructions, any method provided by the embodiments of the present disclosure. The processor and the memory may also be physically arranged separately.

It should be noted here that the terminal provided by the embodiments of the present disclosure can implement all the method steps implemented by the method embodiments applied to the relay terminal and achieve the same technical effects. Details and beneficial effects that are the same as those in the method embodiments are not repeated in this embodiment.

As shown in FIG. 15, an embodiment of the present disclosure also provides a terminal. The terminal is a first terminal, comprising: a memory 1520, a transceiver 1500, and a processor 1510. Wherein, the memory 1520 is configured to store a computer program; the transceiver 1500 is configured to receive and send data under the control of the processor 1510; the processor 1510 is configured to read the computer program in the memory and perform the following operations:
sending a mapping between a first target object and a second hop LCG ID to a relay terminal, or, receiving a mapping between a second target object and a first hop LCG ID sent by the relay terminal;
Wherein, the first target object comprises one of the following:
   a first hop SL RLC channel;
   a second hop SL RLC channel;
   an end-to-end bearer between the first terminal and a second terminal;
   The second target object comprises one of the following:
      a first hop SL RLC channel;
      an end-to-end bearer between the first terminal and the second terminal;
      Wherein, the first hop is a direct communication interface and/or link between the first terminal and the relay terminal, and the second hop is a direct communication interface and/or link between the relay terminal and the second terminal;
      The first terminal and the second terminal establish an end-to-end connection through the relay terminal, the first terminal is a terminal that sends data through the relay terminal, and the second terminal is a terminal that receives data through the relay terminal.

In some embodiments, the processor is configured to read the computer program in the memory and perform the following operations:
determining first configuration information, the first configuration information comprising the mapping between the first target object and the second hop LCG ID;
sending the first configuration information to the relay terminal.

In some embodiments, the processor is configured to read the computer program in the memory and perform the following operation:
receiving the first configuration information sent by a second network device, wherein the second network device is a network device serving the first terminal.

In some embodiments, the processor is configured to read the computer program in the memory and perform the following operation:
sending second assistance information to the second network device;
Wherein, the second assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

In some embodiments, the first configuration information is carried by at least one of the following signaling:
PC5-RRC signaling;
MAC CE;
SCI.

In some embodiments, the processor is configured to read the computer program in the memory and perform the following operation:
receiving second configuration information sent by the relay terminal, the second configuration information comprising the mapping between the second target object and the first hop LCG ID.

In some embodiments, the second configuration information is carried by at least one of the following signaling:
PC5-RRC signaling;
MAC CE;
SCI.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

In FIG. 15, the bus architecture may include any number of interconnected buses and bridges, specifically linking various circuits represented by the processor 1510 and the memory 1520. The bus architecture may also link various other circuits such as peripherals, voltage regulators, and power management circuits, which are well known in the art, and therefore will not be further described herein. The bus interface provides an interface. The transceiver 1500 may be multiple elements, i.e., including a transmitter and a transceiver, providing units for communicating with various other apparatuses over a transmission medium. For different user equipment, the user interface 1530 may also be an interface capable of externally or internally connecting necessary devices, including but not limited to a keypad, display, speaker, microphone, joystick, etc.

The processor 1510 is responsible for managing the bus architecture and general processing, and the memory 1520 may store data used by the processor 1510 when performing operations.

In some embodiments, the processor 1510 may be a CPU, ASIC, FPGA, or CPLD. The processor may also adopt a multi-core architecture.

The processor, by calling the computer program stored in the memory, is configured to execute, according to the obtained executable instructions, any method provided by the embodiments of the present disclosure. The processor and the memory may also be physically arranged separately.

It should be noted here that the terminal provided by the embodiments of the present disclosure can implement all the method steps implemented by the method embodiments applied to the first terminal and achieve the same technical effects. Details and beneficial effects that are the same as those in the method embodiments are not repeated in this embodiment.

As shown in FIG. 16, an embodiment of the present disclosure also provides a network device. The network device is a first network device, comprising: a memory 1620, a transceiver 1600, and a processor 1610. Wherein, the memory 1620 is configured to store a computer program; the transceiver 1600 is configured to receive and send data under the control of the processor 1610; the processor 1610 is configured to read the computer program in the memory and perform the following operation:
receiving an SL BSR sent by a relay terminal according to a mapping between a first target object and a second hop LCG ID;
Wherein, the first target object comprises one of the following:
   a first hop SL RLC channel;
   a second hop SL RLC channel;
   an end-to-end bearer between a first terminal and a second terminal;
   Wherein, the first hop is a direct communication interface and/or link between the first terminal and the relay terminal, and the second hop is a direct communication interface and/or link between the relay terminal and the second terminal;
   The first terminal and the second terminal establish an end-to-end connection through the relay terminal, the first terminal is a terminal that sends data through the relay terminal, and the second terminal is a terminal that receives data through the relay terminal.

In some embodiments, the processor is configured to read the computer program in the memory and perform the following operation:
sending the mapping between the first target object and the second hop LCG ID to the relay terminal.

In some embodiments, the processor is configured to read the computer program in the memory and perform the following operation:
receiving first assistance information sent by the relay terminal;
Wherein, the first assistance information comprises at least one of the following:
   QoS profile of an end-to-end service;
   layer 2 destination address of the relay terminal;
   layer 2 source address of the relay terminal;
   end-to-end layer 2 destination address corresponding to the second terminal;
   end-to-end layer 2 source address corresponding to the second terminal.

In some embodiments, identification information of the first hop SL RLC channel comprises at least one of the following:
a logical channel identifier;
a layer 2 source address identifier of the first terminal;
a layer 2 destination address identifier of the relay terminal;
a transmission type identifier.

In some embodiments, identification information of the second hop SL RLC channel comprises at least one of the following:
a logical channel identifier;
a layer 2 destination address identifier of the second terminal;
a layer 2 source address identifier of the relay terminal;
a transmission type identifier.

In FIG. 16, the bus architecture may include any number of interconnected buses and bridges, specifically linking various circuits represented by the processor 1610 and the memory 1620. The bus architecture may also link various other circuits such as peripherals, voltage regulators, and power management circuits, which are well known in the art, and therefore will not be further described herein. The bus interface provides an interface. The transceiver 1600 may be multiple elements, i.e., including a transmitter and a transceiver, providing units for communicating with various other apparatuses over a transmission medium. The processor 1610 is responsible for managing the bus architecture and general processing, and the memory 1620 may store data used by the processor 1610 when performing operations.

The processor 1610 may be a CPU, ASIC, FPGA, or CPLD. The processor may also adopt a multi-core architecture.

It should be noted here that the apparatus provided by the embodiments of the present disclosure can implement all the method steps implemented by the method embodiments applied to the first network device and achieve the same technical effects. Details and beneficial effects that are the same as those in the method embodiments are not repeated in this embodiment.

In addition, a specific embodiment of the present disclosure also provides a processor-readable storage medium, having stored thereon a computer program, which when executed by a processor, implements the steps of the buffer status reporting method described above and can achieve the same technical effects. To avoid repetition, details are not repeated here. The readable storage medium may be any available medium or data storage device that the processor can access, including but not limited to magnetic memory (e.g., floppy disk, hard disk, magnetic tape, Magneto-Optical Disk (MO), etc.), optical memory (e.g., Compact Disk (CD), Digital Video Disc (DVD), Blu-ray Disc (BD), High-Definition Versatile Disc (HVD), etc.), and semiconductor memory (e.g., Read-Only Memory (ROM), Erasable Programmable Read-Only Memory (EPROM), Electrically Erasable Programmable Read-Only Memory (EEPROM), non-volatile memory (NAND FLASH), Solid State Disk or Solid State Drive (SSD)), etc.

It should be noted that the technical solutions provided by the embodiments of the present disclosure can be applied to various systems, especially 5G systems. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, 5G New Radio (NR) system, etc. These various systems all include terminal devices and network devices. The systems may also include core network parts, such as Evolved Packet System (EPS), 5G System (5GS), etc.

The terminal device involved in the embodiments of the present disclosure may refer to a device that provides voice and/or data connectivity to a user, a handheld device with wireless connection function, or other processing device connected to a wireless modem. In different systems, the name of the terminal device may also be different. For example, in a 5G system, the terminal device may be referred to as User Equipment (UE). A wireless terminal device may communicate with one or more core networks via a Radio Access Network (RAN). The wireless terminal device may be a mobile terminal device, such as a mobile phone (or "cellular" phone) and a computer with a mobile terminal device. For example, it may be a portable, pocket-sized, handheld, computer-built-in, or vehicle-mounted mobile device that exchanges language and/or data with the radio access network. For example, Personal Communication Service (PCS) phone, cordless phone, Session Initiated Protocol (SIP) phone, Wireless Local Loop (WLL) station, Personal Digital Assistant (PDA), and other devices. The wireless terminal device may also be called a system, subscriber unit, subscriber station, mobile station, mobile, remote station, access point, remote terminal, access terminal, user terminal, user agent, user device. This is not limited in the embodiments of the present disclosure.

The network device involved in the embodiments of the present disclosure may be a base station, which may include multiple cells serving terminals. Depending on the specific application occasion, the base station may also be called an access point, or may be a device in the access network that communicates with a wireless terminal device over an air interface through one or more sectors, or have other names. The network device may be used to interchange received air frames with Internet Protocol (IP) packets, and act as a router between the wireless terminal device and the rest of the access network, where the rest of the access network may include an IP communication network. The network device may also coordinate attribute management of the air interface. For example, the network device involved in the embodiments of the present disclosure may be a network device (Base Transceiver Station, BTS) in Global System for Mobile communications (GSM) or Code Division Multiple Access (CDMA), or a network device (NodeB) in Wide-band Code Division Multiple Access (WCDMA), or an evolutional Node B (eNB or e-NodeB) in a Long Term Evolution (LTE) system, or a 5G base station (gNB) in a 5G network architecture (next generation system), or may be a Home evolved Node B (HeNB), a relay node, a femto, a pico, etc., which is not limited in the embodiments of the present disclosure. In some network structures, the network device may include a Centralized Unit (CU) node and a Distributed Unit (DU) node, and the centralized unit and the distributed unit may also be geographically separately arranged.

The network device and the terminal device may each use one or more antennas for Multi Input Multi Output (MIMO) transmission. The MIMO transmission may be Single User MIMO (SU-MIMO) or Multiple User MIMO (MU-MIMO). Depending on the shape and quantity of the root antenna combination, MIMO transmission may be two-dimensional MIMO (2D-MIMO), three-dimensional MIMO (3D-MIMO), Full Dimension MIMO (FD-MIMO), or massive MIMO, or may be diversity transmission, precoding transmission, or beamforming transmission, etc.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including but not limited to disk storage, optical storage, etc.) having computer-usable program code embodied therein.

The present disclosure is described with reference to flowchart illustrations and/or block diagrams of methods, apparatus (systems), and computer program products according to embodiments of the present disclosure. It will be understood that each flow and/or block of the flowchart illustrations and/or block diagrams, and combinations of flows and/or blocks in the flowchart illustrations and/or block diagrams, can be implemented by computer-executable instructions. These computer-executable instructions may be provided to a processor of a general-purpose computer, special-purpose computer, embedded processor, or other programmable data processing device to produce a machine, such that the instructions, which execute via the processor of the computer or other programmable data processing device, create means for implementing the functions specified in one or more flows of the flowchart and/or one or more blocks of the block diagram.

These computer-executable instructions may also be stored in a processor-readable memory that can direct a computer or other programmable data processing device to function in a particular manner, such that the instructions stored in the processor-readable memory produce an article of manufacture including instruction means which implement the function specified in one or more flows of the flowchart and/or one or more blocks of the block diagram.

These computer-executable instructions may also be loaded onto a computer or other programmable data processing device to cause a series of operational steps to be performed on the computer or other programmable device to produce a computer-implemented process such that the instructions which execute on the computer or other programmable device provide steps for implementing the functions specified in one or more flows of the flowchart and/or one or more blocks of the block diagram.

It should be noted that the division of the above modules is merely a division of logical functions. In actual implementation, they may be fully or partially integrated into one physical entity, or may be physically separated. And these modules may all be implemented in the form of software called by processing elements; or may all be implemented in the form of hardware; or some modules may be implemented in the form of software called by processing elements, and some modules may be implemented in the form of hardware. For example, the determination module may be a separately established processing element, or may be integrated in a chip of the above apparatus, or may be stored in the memory of the above apparatus in the form of program code, and called by a processing element of the above apparatus to execute the function of the determination module. The implementation of other modules is similar. In addition, all or part of these modules may be integrated together, or may be implemented independently. The processing element described here may be an integrated circuit with signal processing capability. In the implementation process, each step of the above method or each module above may be completed by an integrated logic circuit of hardware in the processor element or instructions in the form of software.

For example, each module, unit, subunit, or submodule may be one or more integrated circuits configured to implement the above method, such as: one or more Application Specific Integrated Circuits (ASICs), or one or more microprocessors (digital signal processors, DSPs), or one or more Field Programmable Gate Arrays (FPGAs), etc. For another example, when a module is implemented in the form of a processing element calling program code, the processing element may be a general-purpose processor, such as a Central Processing Unit (CPU) or other processor that can call program code. For another example, these modules may be integrated together and implemented in the form of a System-on-a-Chip (SOC).

The terms "first", "second", etc. in the specification and claims of the present disclosure are used to distinguish similar objects, and are not necessarily used to describe a specific order or sequence. It should be understood that the data so used may be interchanged under appropriate circumstances, so that the embodiments of the present disclosure described herein can be implemented in an order other than those illustrated or described herein. In addition, the terms "comprise" and "have" and any variations thereof are intended to cover non-exclusive inclusion. For example, a process, method, system, product, or device that comprises a series of steps or units is not necessarily limited to those clearly listed steps or units, but may include other steps or units not clearly listed or inherent to these processes, methods, products, or devices. In addition, the use of "and/or" in the specification and claims indicates at least one of the connected objects. For example, A and/or B and/or C indicates seven cases: A alone, B alone, C alone, both A and B, both B and C, both A and C, and all of A, B, and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A buffer status reporting method, comprising:
acquiring, by a relay terminal, a mapping between a first target object and a logical channel group (LCG) identifier (ID) of a second hop;
sending, by the relay terminal, a sidelink (SL) buffer status report (BSR) to a first network device according to the mapping between the first target object and the LCG ID of the second hop;
wherein the first target object comprises one of:
an SL radio link control (RLC) channel of a first hop;
an SL RLC channel of the second hop;
an end-to-end bearer between a first terminal and a second terminal;
wherein the first hop is a direct communication interface and/or link between the first terminal and the relay terminal, and the second hop is a direct communication interface and/or link between the relay terminal and the second terminal;
the first terminal and the second terminal establish an end-to-end connection via the relay terminal, the first terminal being a terminal that transmits data via the relay terminal, and the second terminal being a terminal that receives data via the relay terminal;
the first network device is a network device serving the relay terminal.

2. The method according to claim 1, wherein the acquiring a mapping between a first target object and a logical channel group (LCG) identifier (ID) of a second hop comprises:
acquiring the mapping between the first target object and the LCG ID of the second hop from a first node;
the first node comprising one of:
the first terminal;
the relay terminal;
the first network device.

3. The method according to claim 2, wherein in a case that the first node is the first terminal, the acquiring the mapping between the first target object and the LCG ID of the second hop from a first node comprises:
receiving first configuration information sent by the first terminal, the first configuration information comprising the mapping between the first target object and the LCG ID of the second hop.

4. The method according to claim 2, wherein in a case that the first node is the relay terminal or the first node is the first network device, the method further comprises:
sending second configuration information to the first terminal, the second configuration information comprising a mapping between a second target object and an LCG ID of the first hop;
wherein the second target object comprises one of:
an SL RLC channel of the first hop;
an end-to-end bearer between the first terminal and the second terminal.

5. The method according to claim 2, wherein in a case that the first node is the first network device, the method further comprises:
sending first assistance information to the first network device;
wherein the first assistance information comprises at least one of:
a quality of service (QoS) attribute of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

6. The method according to claim 3, wherein the first configuration information is carried by at least one of the following signaling:
sidelink radio resource control (PC5-RRC) signaling;
a media access control control element (MAC CE);
sidelink control information (SCI).

7. The method according to claim 4, wherein the second configuration information is carried by at least one of the following signaling:
PC5-RRC signaling;
a MAC CE;
SCI.

8. The method according to claim 1, wherein identification information of the SL RLC channel of the first hop comprises at least one of:
a logical channel identifier;
an identifier of a layer 2 source address of the first terminal;
an identifier of a layer 2 destination address of the relay terminal;
a transmission type identifier.

9. The method according to claim 1, wherein identification information of the SL RLC channel of the second hop comprises at least one of:
a logical channel identifier;
an identifier of a layer 2 destination address of the second terminal;
an identifier of a layer 2 source address of the relay terminal;
a transmission type identifier.

10. A buffer status reporting method, comprising:
sending, by a first terminal, a mapping between a first target object and a logical channel group (LCG) identifier (ID) of a second hop to a relay terminal, or receiving, by the first terminal, a mapping between a second target object and an LCG ID of a first hop from the relay terminal;
wherein the first target object comprises one of:
a sidelink (SL) radio link control (RLC) channel of a first hop;
an SL RLC channel of the second hop;
an end-to-end bearer between the first terminal and a second terminal;
the second target object comprises one of:
an SL RLC channel of the first hop;
an end-to-end bearer between the first terminal and the second terminal;
wherein the first hop is a direct communication interface and/or link between the first terminal and the relay terminal, and the second hop is a direct communication interface and/or link between the relay terminal and the second terminal;
the first terminal and the second terminal establish an end-to-end connection via the relay terminal, the first terminal being a terminal that transmits data via the relay terminal, and the second terminal being a terminal that receives data via the relay terminal.

11. The method according to claim 10, wherein the sending, to a relay terminal, a mapping between a first target object and a logical channel group (LCG) identifier (ID) of a second hop comprises:
determining first configuration information, the first configuration information comprising the mapping between the first target object and the LCG ID of the second hop;
sending the first configuration information to the relay terminal.

12. The method according to claim 11, wherein the determining first configuration information comprises:
receiving the first configuration information sent by a second network device, the second network device being a network device serving the first terminal.

13. The method according to claim 12, further comprising:
sending second assistance information to the second network device;
wherein the second assistance information comprises at least one of:
a quality of service (QoS) attribute of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

14. The method according to claim 11, wherein the first configuration information is carried by at least one of the following signaling:
sidelink radio resource control (PC5-RRC) signaling;
a media access control control element (MAC CE);
sidelink control information (SCI).

15. The method according to claim 10, wherein the receiving, from the relay terminal, a mapping between a second target object and an LCG ID of a first hop comprises:
receiving second configuration information sent by the relay terminal, the second configuration information comprising the mapping between the second target object and the LCG ID of the first hop.

16. The method according to claim 15, wherein the second configuration information is carried by at least one of the following signaling:
PC5-RRC signaling;
a MAC CE;
SCI.

17. The method according to claim 10, wherein identification information of the SL RLC channel of the first hop comprises at least one of:
a logical channel identifier;
an identifier of a layer 2 source address of the first terminal;
an identifier of a layer 2 destination address of the relay terminal;
a transmission type identifier.

18. The method according to claim 10, wherein identification information of the SL RLC channel of the second hop comprises at least one of:
a logical channel identifier;
an identifier of a layer 2 destination address of the second terminal;
an identifier of a layer 2 source address of the relay terminal;
a transmission type identifier.

19. A buffer status reporting method, comprising:
receiving, by a first network device, a sidelink (SL) buffer status report (BSR) from a relay terminal, wherein the SL BSR is sent according to a mapping between a first target object and a logical channel group (LCG) identifier (ID) of a second hop;
wherein the first target object comprises one of:
an SL radio link control (RLC) channel of a first hop;
an SL RLC channel of the second hop;
an end-to-end bearer between a first terminal and a second terminal;
wherein the first hop is a direct communication interface and/or link between the first terminal and the relay terminal, and the second hop is a direct communication interface and/or link between the relay terminal and the second terminal;
the first terminal and the second terminal establish an end-to-end connection via the relay terminal, the first terminal being a terminal that transmits data via the relay terminal, and the second terminal being a terminal that receives data via the relay terminal.

20. The method according to claim 19, further comprising:
sending, to the relay terminal, the mapping between the first target object and the LCG ID of the second hop.

21. The method according to claim 20, further comprising:
receiving first assistance information sent by the relay terminal;
wherein the first assistance information comprises at least one of:
a quality of service (QoS) attribute of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

22. The method according to claim 19, wherein identification information of the SL RLC channel of the first hop comprises at least one of:
a logical channel identifier;
an identifier of a layer 2 source address of the first terminal;
an identifier of a layer 2 destination address of the relay terminal;
a transmission type identifier.

23. The method according to claim 19, wherein identification information of the SL RLC channel of the second hop comprises at least one of:
a logical channel identifier;
an identifier of a layer 2 destination address of the second terminal;
an identifier of a layer 2 source address of the relay terminal;
a transmission type identifier.

24. A terminal, comprising: a memory, a transceiver, and a processor:
the memory is configured to store a computer program; the transceiver is configured to transmit and receive data under control of the processor; the processor is configured to read the computer program in the memory and perform the following operations:
acquiring a mapping between a first target object and a logical channel group (LCG) identifier (ID) of a second hop;
sending a sidelink (SL) buffer status report (BSR) to a first network device according to the mapping between the first target object and the LCG ID of the second hop;
wherein the first target object comprises one of:
an SL radio link control (RLC) channel of a first hop;
an SL RLC channel of the second hop;
an end-to-end bearer between a first terminal and a second terminal;
wherein the first hop is a direct communication interface and/or link between the first terminal and the terminal, and the second hop is a direct communication interface and/or link between the terminal and the second terminal;
the first terminal and the second terminal establish an end-to-end connection via the terminal, the first terminal being a terminal that transmits data via the terminal, and the second terminal being a terminal that receives data via the terminal;
the first network device is a network device serving the terminal.

25. The terminal according to claim 24, wherein the processor is configured to read the computer program in the memory and perform the following operation:
acquiring the mapping between the first target object and the LCG ID of the second hop from a first node;
the first node comprising one of:
the first terminal;
the terminal;
the first network device.

26. The terminal according to claim 25, wherein the processor is configured to read the computer program in the memory and perform the following operation:
receiving first configuration information sent by the first terminal, the first configuration information comprising the mapping between the first target object and the LCG ID of the second hop.

27. The terminal according to claim 25, wherein the processor is configured to read the computer program in the memory and perform the following operation:
sending second configuration information to the first terminal, the second configuration information comprising a mapping between a second target object and an LCG ID of the first hop;
wherein the second target object comprises one of:
an SL RLC channel of the first hop;
an end-to-end bearer between the first terminal and the second terminal.

28. The terminal according to claim 25, wherein the processor is configured to read the computer program in the memory and perform the following operation:
sending first assistance information to the first network device;
wherein the first assistance information comprises at least one of:
a quality of service (QoS) attribute of an end-to-end service;
a layer 2 destination address of the terminal;
a layer 2 source address of the terminal;
an end-to-end layer 2 destination address corresponding to the second terminal;
an end-to-end layer 2 source address corresponding to the second terminal.

29. The terminal according to claim 26, wherein the first configuration information is carried by at least one of the following signaling:
sidelink radio resource control (PC5-RRC) signaling;
a media access control control element (MAC CE);
sidelink control information (SCI).

30. The terminal according to claim 27, wherein the second configuration information is carried by at least one of the following signaling:
PC5-RRC signaling;
a MAC CE;
SCI.

31. The terminal according to claim 24, wherein identification information of the SL RLC channel of the first hop comprises at least one of:
a logical channel identifier;
an identifier of a layer 2 source address of the first terminal;
an identifier of a layer 2 destination address of the terminal;
a transmission type identifier.

32. The terminal according to claim 24, wherein identification information of the SL RLC channel of the second hop comprises at least one of:
a logical channel identifier;
an identifier of a layer 2 destination address of the second terminal;
an identifier of a layer 2 source address of the terminal;
a transmission type identifier.

33. A terminal, comprising: a memory, a transceiver, and a processor:
the memory is configured to store a computer program; the transceiver is configured to transmit and receive data under control of the processor; the processor is configured to read the computer program in the memory and perform the following operation:
sending, to a relay terminal, a mapping between a first target object and a logical channel group (LCG) identifier (ID) of a second hop, or receiving, from the relay terminal, a mapping between a second target object and an LCG ID of a first hop;
wherein the first target object comprises one of:
a sidelink (SL) radio link control (RLC) channel of a first hop;
an SL RLC channel of the second hop;
an end-to-end bearer between the terminal and a second terminal;
the second target object comprises one of:
an SL RLC channel of the first hop;
an end-to-end bearer between the terminal and the second terminal;
wherein the first hop is a direct communication interface and/or link between the terminal and the relay terminal, and the second hop is a direct communication interface and/or link between the relay terminal and the second terminal;
the terminal and the second terminal establish an end-to-end connection via the relay terminal, the terminal being a terminal that transmits data via the relay terminal, and the second terminal being a terminal that receives data via the relay terminal.

34. The terminal according to claim 33, wherein the processor is configured to read the computer program in the memory and perform the following operations:
determining first configuration information, the first configuration information comprising the mapping between the first target object and the LCG ID of the second hop;
sending the first configuration information to the relay terminal.

35. The terminal according to claim 34, wherein the processor is configured to read the computer program in the memory and perform the following operation:
receiving the first configuration information sent by a second network device, the second network device being a network device serving the terminal.

36. The terminal according to claim 35, wherein the processor is configured to read the computer program in the memory and perform the following operation:
sending second assistance information to the second network device;
wherein the second assistance information comprises at least one of:
a quality of service (QoS) attribute of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

37. The terminal according to claim 34, wherein the first configuration information is carried by at least one of the following signaling:
sidelink radio resource control (PC5-RRC) signaling;
a media access control control element (MAC CE);
sidelink control information (SCI).

38. The terminal according to claim 33, wherein the processor is configured to read the computer program in the memory and perform the following operation:
receiving second configuration information sent by the relay terminal, the second configuration information comprising the mapping between the second target object and the LCG ID of the first hop.

39. The terminal according to claim 38, wherein the second configuration information is carried by at least one of the following signaling:
PC5-RRC signaling;
a MAC CE;
SCI.

40. The terminal according to claim 33, wherein identification information of the SL RLC channel of the first hop comprises at least one of:
a logical channel identifier;
an identifier of a layer 2 source address of the terminal;
an identifier of a layer 2 destination address of the relay terminal;
a transmission type identifier.

41. The terminal according to claim 33, wherein identification information of the SL RLC channel of the second hop comprises at least one of:
a logical channel identifier;
an identifier of a layer 2 destination address of the second terminal;
an identifier of a layer 2 source address of the relay terminal;
a transmission type identifier.

42. A network device, comprising: a memory, a transceiver, and a processor:
the memory is configured to store a computer program; the transceiver is configured to transmit and receive data under control of the processor; the processor is configured to read the computer program in the memory and perform the following operation:
receiving, from a relay terminal, a sidelink (SL) buffer status report (BSR) sent according to a mapping between a first target object and a logical channel group (LCG) identifier (ID) of a second hop;
wherein the first target object comprises one of:
an SL radio link control (RLC) channel of a first hop;
an SL RLC channel of the second hop;
an end-to-end bearer between a first terminal and a second terminal;
wherein the first hop is a direct communication interface and/or link between the first terminal and the relay terminal, and the second hop is a direct communication interface and/or link between the relay terminal and the second terminal;
the first terminal and the second terminal establish an end-to-end connection via the relay terminal, the first terminal being a terminal that transmits data via the relay terminal, and the second terminal being a terminal that receives data via the relay terminal.

43. The network device according to claim 42, wherein the processor is configured to read the computer program in the memory and perform the following operation:
sending, to the relay terminal, the mapping between the first target object and the LCG ID of the second hop.

44. The network device according to claim 43, wherein the processor is configured to read the computer program in the memory and perform the following operation:
receiving first assistance information sent by the relay terminal;
wherein the first assistance information comprises at least one of:
a quality of service (QoS) attribute of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

45. The network device according to claim 42, wherein identification information of the SL RLC channel of the first hop comprises at least one of:
a logical channel identifier;
an identifier of a layer 2 source address of the first terminal;
an identifier of a layer 2 destination address of the relay terminal;
a transmission type identifier.

46. The network device according to claim 42, wherein identification information of the SL RLC channel of the second hop comprises at least one of:
a logical channel identifier;
an identifier of a layer 2 destination address of the second terminal;
an identifier of a layer 2 source address of the relay terminal;
a transmission type identifier.

47. A buffer status reporting apparatus, comprising:
a first acquisition unit, configured to acquire a mapping between a first target object and a logical channel group (LCG) identifier (ID) of a second hop;
a first sending unit, configured to send, to a first network device, a sidelink (SL) buffer status report (BSR) according to the mapping between the first target object and the LCG ID of the second hop;
wherein the first target object comprises one of:
an SL radio link control (RLC) channel of a first hop;
an SL RLC channel of the second hop;
an end-to-end bearer between a first terminal and a second terminal;
wherein the first hop is a direct communication interface and/or link between the first terminal and a relay terminal, and the second hop is a direct communication interface and/or link between the relay terminal and the second terminal;
the first terminal and the second terminal establish an end-to-end connection via the relay terminal, the first terminal being a terminal that transmits data via the relay terminal, and the second terminal being a terminal that receives data via the relay terminal;
the first network device is a network device serving the relay terminal.

48. The apparatus according to claim 47, wherein the first acquisition unit is specifically configured to:
acquire the mapping between the first target object and the LCG ID of the second hop from a first node;
the first node comprising one of:
the first terminal;
the relay terminal;
the first network device.

49. The apparatus according to claim 48, wherein in a case that the first node is the first terminal, the first acquisition unit is specifically configured to:
receive first configuration information sent by the first terminal, the first configuration information comprising the mapping between the first target object and the LCG ID of the second hop.

50. The apparatus according to claim 48, wherein in a case that the first node is the relay terminal or the first node is the first network device, the apparatus further comprises:
a second sending unit, configured to send second configuration information to the first terminal, the second configuration information comprising a mapping between a second target object and an LCG ID of the first hop;
wherein the second target object comprises one of:
an SL RLC channel of the first hop;
an end-to-end bearer between the first terminal and the second terminal.

51. The apparatus according to claim 48, further comprising:
a third sending unit, configured to, in a case that the first node is the first network device, send first assistance information to the first network device;
wherein the first assistance information comprises at least one of:
a quality of service (QoS) attribute of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

52. The apparatus according to claim 49, wherein the first configuration information is carried by at least one of the following signaling:
sidelink radio resource control (PC5-RRC) signaling;
a media access control control element (MAC CE);
sidelink control information (SCI).

53. The apparatus according to claim 50, wherein the second configuration information is carried by at least one of the following signaling:
PC5-RRC signaling;
a MAC CE;
SCI.

54. The apparatus according to claim 47, wherein identification information of the SL RLC channel of the first hop comprises at least one of:
a logical channel identifier;
an identifier of a layer 2 source address of the first terminal;
an identifier of a layer 2 destination address of the relay terminal;
a transmission type identifier.

55. The apparatus according to claim 47, wherein identification information of the SL RLC channel of the second hop comprises at least one of:
a logical channel identifier;
an identifier of a layer 2 destination address of the second terminal;
an identifier of a layer 2 source address of the relay terminal;
a transmission type identifier.

56. A buffer status reporting apparatus, comprising:
a transmission unit, configured to send, to a relay terminal, a mapping between a first target object and a logical channel group (LCG) identifier (ID) of a second hop, or receive, from the relay terminal, a mapping between a second target object and an LCG ID of a first hop;
wherein the first target object comprises one of:
a sidelink (SL) radio link control (RLC) channel of a first hop;
an SL RLC channel of the second hop;
an end-to-end bearer between a first terminal and a second terminal;
the second target object comprises one of:
an SL RLC channel of the first hop;
an end-to-end bearer between the first terminal and the second terminal;
wherein the first hop is a direct communication interface and/or link between the first terminal and the relay terminal, and the second hop is a direct communication interface and/or link between the relay terminal and the second terminal;
the first terminal and the second terminal establish an end-to-end connection via the relay terminal, the first terminal being a terminal that transmits data via the relay terminal, and the second terminal being a terminal that receives data via the relay terminal.

57. The apparatus according to claim 56, wherein the transmission unit comprises:
a determination subunit, configured to determine first configuration information, the first configuration information comprising the mapping between the first target object and the LCG ID of the second hop;
a sending subunit, configured to send the first configuration information to the relay terminal.

58. The apparatus according to claim 57, wherein the determination subunit is specifically configured to:
receive the first configuration information sent by a second network device, the second network device being a network device serving the first terminal.

59. The apparatus according to claim 58, further comprising:
a fourth sending unit, configured to send second assistance information to the second network device;
wherein the second assistance information comprises at least one of:
a quality of service (QoS) attribute of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

60. The apparatus according to claim 57, wherein the first configuration information is carried by at least one of the following signaling:
sidelink radio resource control (PC5-RRC) signaling;
a media access control control element (MAC CE);
sidelink control information (SCI).

61. The apparatus according to claim 56, wherein the transmission unit is specifically configured to:
receive second configuration information sent by the relay terminal, the second configuration information comprising the mapping between the second target object and the LCG ID of the first hop.

62. The apparatus according to claim 61, wherein the second configuration information is carried by at least one of the following signaling:
PC5-RRC signaling;
a MAC CE;
SCI.

63. The apparatus according to claim 56, wherein identification information of the SL RLC channel of the first hop comprises at least one of:
a logical channel identifier;
an identifier of a layer 2 source address of the first terminal;
an identifier of a layer 2 destination address of the relay terminal;
a transmission type identifier.

64. The apparatus according to claim 56, wherein identification information of the SL RLC channel of the second hop comprises at least one of:
a logical channel identifier;
an identifier of a layer 2 destination address of the second terminal;
an identifier of a layer 2 source address of the relay terminal;
a transmission type identifier.

65. A buffer status reporting apparatus, comprising:
a first receiving unit, configured to receive, from a relay terminal, a sidelink (SL) buffer status report (BSR) sent according to a mapping between a first target object and a logical channel group (LCG) identifier (ID) of a second hop;
wherein the first target object comprises one of:
an SL radio link control (RLC) channel of a first hop;
an SL RLC channel of the second hop;
an end-to-end bearer between a first terminal and a second terminal;
wherein the first hop is a direct communication interface and/or link between the first terminal and the relay terminal, and the second hop is a direct communication interface and/or link between the relay terminal and the second terminal;
the first terminal and the second terminal establish an end-to-end connection via the relay terminal, the first terminal being a terminal that transmits data via the relay terminal, and the second terminal being a terminal that receives data via the relay terminal.

66. The apparatus according to claim 65, further comprising:
a fifth sending unit, configured to send, to the relay terminal, the mapping between the first target object and the LCG ID of the second hop.

67. The apparatus according to claim 66, further comprising:
a second receiving unit, configured to receive first assistance information sent by the relay terminal;
wherein the first assistance information comprises at least one of:
a quality of service (QoS) attribute of an end-to-end service;
a layer 2 destination address of the relay terminal;
a layer 2 source address of the relay terminal;
an end-to-end layer 2 destination address corresponding to the second terminal;
an end-to-end layer 2 source address corresponding to the second terminal.

68. The apparatus according to claim 65, wherein identification information of the SL RLC channel of the first hop comprises at least one of:
a logical channel identifier;
an identifier of a layer 2 source address of the first terminal;
an identifier of a layer 2 destination address of the relay terminal;
a transmission type identifier.

69. The apparatus according to claim 65, wherein identification information of the SL RLC channel of the second hop comprises at least one of:
a logical channel identifier;
an identifier of a layer 2 destination address of the second terminal;
an identifier of a layer 2 source address of the relay terminal;
a transmission type identifier.

70. A processor-readable storage medium, storing a computer program, wherein the computer program is configured to cause a processor to execute the steps of the buffer status reporting method according to any one of claims 1 to 9, or to execute the steps of the buffer status reporting method according to any one of claims 10 to 18, or to execute the steps of the buffer status reporting method according to any one of claims 19 to 23.
